(19) Europäisches Patentamt
European Patent Office
Office européen des brevets

(11) EP 4 697 699 A1

(12) EUROPEAN PATENT APPLICATION
published in accordance with Art. 153(4) EPC

(43) Date of publication:
18.02.2026 Bulletin 2026/08

(51) International Patent Classification (IPC):
H04N 19/103 (2014.01)

(21) Application number: 24788241.8

(22) Date of filing: 12.04.2024

(52) Cooperative Patent Classification (CPC):
H04N 19/103; H04N 19/176; H04N 19/184;
H04N 19/44

(86) International application number:
PCT/CN2024/087619

(87) International publication number:
WO 2024/213145 (17.10.2024 Gazette 2024/42)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
GE KH MA MD TN

(30) Priority: 14.04.2023 CN 202310429626

(71) Applicant: Hangzhou Hikvision Digital
Technology Co., Ltd.
Hangzhou, Zhejiang 310051 (CN)

(72) Inventors:
• CHEN, Fangdong
  Hangzhou, Zhejiang 310051 (CN)
• WANG, Li
  Hangzhou, Zhejiang 310051 (CN)
• WU, Xiaoyang
  Hangzhou, Zhejiang 310051 (CN)

(74) Representative: Goddar, Heinz J.
Boehmert & Boehmert
Anwaltspartnerschaft mbB
Pettenkoferstrasse 22
80336 München (DE)

(54) **DECODING METHOD AND APPARATUS, ENCODING METHOD AND APPARATUS, DEVICE, AND MEDIUM**

(57) The present disclosure provides decoding methods and apparatuses, coding methods and apparatuses, devices and media thereof, the decoding method includes: obtaining, by decoding a first bitstream of a current image block, a coefficient hyperparameter feature of each of stage sub-blocks in the current image block; for each of the stage sub-blocks, determining a probability distribution parameter based on the coefficient hyperparameter feature of the stage sub-block, and obtaining, by decoding a second bitstream of the current image block based on the probability distribution parameter, a residual feature of the stage sub-block; determining a reconstructed feature of the stage sub-block based on the residual feature of the stage sub-block and a mean feature of the stage sub-block; and determining a reconstructed image block corresponding to the current image block based on respective reconstructed features of the stage sub-blocks. Through the technical solutions of the present disclosure, coding performance and decoding performance can be improved.

Obtain, by decoding a first bitstream of a current image block, a coefficient hyperparameter feature of each of stage sub-blocks in the current image block — 201

For each of the stage sub-blocks, determine a probability distribution parameter based on the coefficient hyperparameter feature of the stage sub-block, and obtain, by decoding a second bitstream of the current image block based on the probability distribution parameter, a residual feature of the stage sub-block — 202

Determine a reconstructed feature of the stage sub-block based on the residual feature of the stage sub-block and a mean feature of the stage sub-block — 203

Determine a reconstructed image block corresponding to the current image block based on respective reconstructed features of the stage sub-blocks — 204

FIG. 2

**Description**

**TECHNICAL FIELD**

The present disclosure relates to coding and decoding technologies, in particular to decoding methods and apparatuses, coding methods and apparatuses, devices and media thereof.

**BACKGROUND**

For achieving the purpose of saving spaces, videos or images are transmitted after being coded. A complete video coding may include processes such as prediction, transform, quantization, entropy coding, filtering and so on. For a prediction process, the prediction process can include intra prediction and inter prediction. The inter prediction refers to an operation of utilizing a temporal correlation of a video to predict current pixels by using pixels of a neighbouring coded picture, so as to achieve the purpose of effectively removing temporal redundancy of the video. The intra prediction refers to an operation of utilizing a spatial correlation of a video to predict current pixels by using pixels of one or more coded blocks of the current picture, so as to achieve the purpose of removing spatial redundancy of the video.

With the rapid development of deep learning, deep learning has succeeded in many high-level computer vision problems, such as image classification, object detection, etc., and deep learning has gradually begun to be applied in the field of coding and decoding, that is, neural networks can be used to code and decode images. Although the coding and decoding method based on neural network shows great performance potential, there are still some problems in the coding and decoding method based on neural network, such as poor coding performance, poor decoding performance and high complexity.

**SUMMARY**

In view of this, the present disclosure provides decoding methods and apparatuses, coding methods and apparatuses, devices and media thereof, which improves coding performance and decoding performance.

The present disclosure provides a decoding method, which is performed by a decoding device, and the method including:

    obtaining, by decoding a first bitstream of a current image block, a coefficient hyperparameter feature of each of stage sub-blocks in the current image block;

    for each of the stage sub-blocks, determining a probability distribution parameter based on the coefficient hyperparameter feature of the stage sub-block; obtaining, by decoding a second bitstream of the current image block based on the probability distribution parameter, a residual feature of the stage sub-block;

    determining a reconstructed feature of the stage sub-block based on the residual feature of the stage sub-block and a mean feature of the stage sub-block; and

    determining a reconstructed image block corresponding to the current image block based on respective reconstructed features of the stage sub-blocks.

The present disclosure provides a coding method, which is performed by a coding device, and the method including:

    obtaining, by inputting a current image block into an analysis transform network, a feature block corresponding to the current image block;

    splitting the feature block into to-be-coded features of a plurality of stage sub-blocks;

    for each of the stage sub-blocks corresponding to the current image block, obtaining a coefficient hyperparameter feature of the stage sub-block, and coding the coefficient hyperparameter feature of the stage sub-block into a first bitstream of the current image block;

    determining a residual feature of the stage sub-block based on the to-be-coded feature of the stage sub-block and a mean feature of the stage sub-block; and

    determining a probability distribution parameter based on the coefficient hyperparameter feature of the stage sub-block, and coding the residual feature of the stage sub-block into a second bitstream of the current image block based on the probability distribution parameter.

The present disclosure provides a decoding method, which is performed by a decoding device, and the method including:

obtaining, by decoding a first bitstream of a current image block, a coefficient hyperparameter feature of the current image block;

determining a probability distribution parameter based on the coefficient hyperparameter feature, obtaining, by decoding a second bitstream of the current image block based on the probability distribution parameter, a residual feature of the current image block, and determining a reconstructed feature of the current image block based on the residual feature; and

obtaining, by decoding an auxiliary bitstream corresponding to the current image block, a bit rate control parameter of the current image block, and obtaining, by inputting the reconstructed feature and the bit rate control parameter into a synthesis transform network, a reconstructed image block corresponding to the current image block.

The present disclosure provides a decoding apparatus, which is applied to a decoding device, and the apparatus including:

a decoding module, configured to obtain, by decoding a first bitstream of a current image block, a coefficient hyperparameter feature of each of stage sub-blocks in the current image block; for each of the stage sub-blocks, determine a probability distribution parameter based on the coefficient hyperparameter feature of the stage sub-block, and obtain, by decoding a second bitstream of the current image block based on the probability distribution parameter, a residual feature of the stage sub-block; and

a determination module, configured to determine a reconstructed feature of the stage sub-block based on the residual feature of the stage sub-block and a mean feature of the stage sub-block; and determine a reconstructed image block corresponding to the current image block based on respective reconstructed features of the stage sub-blocks.

The present disclosure provides a coding apparatus, which is applied to a coding device, and the apparatus including:

an acquisition module, configured to obtain, by inputting a current image block into an analysis transform network, a feature block corresponding to the current image block; and split the feature block into to-be-coded features of a plurality of stage sub-blocks;

a coding module, configured to, for each of the stage sub-blocks corresponding to the current image block, obtain a coefficient hyperparameter feature of the stage sub-block, and code the coefficient hyperparameter feature of the stage sub-block into a first bitstream of the current image block;

a determination module, configured to determine a residual feature of the stage sub-block based on the to-be-coded feature of the stage sub-block and a mean feature of the stage sub-block; and

the coding module is further configured to determine a probability distribution parameter based on the coefficient hyperparameter feature of the stage sub-block, and code the residual feature of the stage sub-block into a second bitstream of the current image block based on the probability distribution parameter.

The present disclosure provides a decoding device, including at least one processor and a machine-readable storage medium, where the machine-readable storage medium stores machine executable instructions executable by the at least one processor,

and the at least one processor is configured to execute the machine-executable instructions to perform the decoding methods described above.

The present disclosure provides a coding device, including at least one processor and a machine-readable storage medium, where the machine-readable storage medium stores machine executable instructions executable by the at least one processor,

and the at least one processor is configured to execute the machine-executable instructions to perform the coding methods described above.

The present disclosure provides an electronic device, including at least one processor and a machine-readable storage medium, where the machine-readable storage medium stores machine-executable instructions executable by the at least one processor, and the at least one processor is configured to execute the machine-executable instructions to perform the decoding methods, or the at least one processor is configured to execute the machine-executable instructions to perform the coding methods.

The present disclosure provides a machine-readable storage medium, on which a number of computer instructions are stored. When the computer instructions are executed by at least one processor, the above-mentioned decoding methods are implemented; or the above-mentioned coding methods are implemented.

The present disclosure provides a computer application program, which, when executed by at least one processor, implements the above-mentioned decoding methods; or, when executed by at least one processor, implements the above-mentioned coding methods.

As can be seen from the above technical solutions, in the embodiments of the present disclosure, for neural network-based coding and decoding technologies, a rate-variable and adjustable coding and decoding solution is proposed. This solution improves parallelism, effectively saves feature storage cache, achieves higher rate control accuracy, incurs less coding performance loss, and provides better coding performance and rate control accuracy. By using block-based coding and decoding, peak memory usage is reduced, the decoding time for a single block is minimized, and high-speed parallel decoding capability is achieved. This ensures the quality of reconstructed image blocks while maintaining low complexity for the neural network, improves coding and decoding performance, and reduces complexity.

## BRIEF DESCRIPTION OF DRAWINGS

FIG. 1 is a schematic diagram of a three-dimensional feature matrix in an embodiment of the present disclosure.
FIG. 2 is a flowchart of a decoding method in an embodiment of the present disclosure.
FIG. 3 is a flowchart of a coding method in an embodiment of the present disclosure.
FIG. 4 is a schematic diagram of a processing procedure at a coding device in an embodiment of the present disclosure.
FIG. 5 is a schematic diagram of a processing procedure at a decoding device in an embodiment of the present disclosure.
FIG. 6 is a schematic diagram of a processing procedure at a coding device in an embodiment of the present disclosure.
FIG. 7 is a schematic diagram of a processing procedure at a decoding device in an embodiment of the present disclosure.
FIGS. 8A-8H are schematic structural diagrams of a mean prediction network in an embodiment of the present disclosure.
FIGS. 9A-9F are schematic diagrams of aggregation and partitioning in an embodiment of the present disclosure.
FIGS. 10A-10C are schematic structural diagrams of a synthesis transform network in an embodiment of the present disclosure.
FIGS. 11A and 11B are schematic diagrams of processing of a convolutional layer in an embodiment of the present disclosure.
FIG. 12 is a schematic decision diagram of $\lambda$ parameter in an embodiment of the present disclosure.
FIG. 13A is a hardware structure diagram of a decoding device in an embodiment of the present disclosure.
FIG. 13B is a hardware structure diagram of a coding device in an embodiment of the present disclosure.

## DETAILED DESCRIPTION

Terms used in embodiments of the present disclosure are only for a purpose of describing specific embodiments, and are not intended to limit the present disclosure. Singular forms of "a", "said", and "the" used in the embodiments of present disclosure and in the claims are also intended to include majority forms, unless the context clearly indicates otherwise. It should also be understood that the term "and/or" as used herein refers to any or all of the possible combinations containing one or more of the listed items in association. It should be understood that although terms first, second, third, etc. may be used to describe various information in the embodiments of the present disclosure, these information should not be limited to these terms. These terms are used only to distinguish the same type of information from one another. For example, without departing from the scope of the embodiments of the present disclosure, first information can also be called second information, and similarly, the second information can also be called the first information, depending on the context. In addition, the word "if" used can be interpreted as "at" or "when" or "in response to determining".

Embodiments of the present disclosure provide decoding methods and coding methods, which may involve the following concepts.

Entropy Encoding: Entropy encoding refers to encoding that does not lose any information according to the principle of entropy during the encoding process, where information entropy is average information content (a measure of uncertainty) of the information source. Coding methods of entropy encoding may include, but are not limited to: Shannon coding, Huffman coding, and arithmetic coding.

Neural Network (NN): A neural network refers to an artificial neural network, which is a computational model composed of a large number of interconnected nodes (or named as neurons). In a neural network, neuron processing units can represent different objects, such as features, letters, concepts, or meaningful abstract patterns. The types of processing units in the neural network can be divided into three categories: input units, output units, and hidden units. Input units receive signals and data from the external world; output units realize the output of processing results; hidden units are located between input and output units and cannot be observed from outside a system. Connection weights between neurons reflect connection strengths between units, and representation and processing of information are embodied in the connection relationships of the processing units. The neural network is a non-programmed, brain-like information processing method. Its essence is to achieve a parallel distributed information processing function through network transformations and dynamic behaviors of the neural network, and to mimic the information processing functions of the human brain's neural system to varying degrees and levels. In the field of video processing, commonly used neural networks may include, but are not limited to: Convolutional Neural Networks (CNN), Recurrent Neural Networks (RNN), and Fully Connected Networks.

Convolutional Neural Network (CNN): A convolutional neural network is a type of feedforward neural network and one of the most representative network structures in deep learning technology. Artificial neurons in a convolutional neural network can respond to surrounding units within a partial receptive field, demonstrating outstanding performance in large-scale image processing. A basic structure of a convolutional neural network includes two layers. One is a feature extraction layer (also named as a convolutional layer), where an input of each neuron is connected to a local receptive field of a previous layer and a feature of that local is extracted. Once the local feature is extracted, its positional relationship with other features is also determined. The other is a feature mapping layer (also named as an activation layer), where each computational layer of the neural network is composed of multiple feature mappings, and each feature mapping is a plane where all neurons have equal weights. The feature mapping structure can adopt Sigmoid function (S-type function), ReLU function (modified linear unit function), Leaky-ReLU function, PReLU function (linear unit function with leakage correction) and Generalized Difference Network (GDN) function as activation functions for the convolutional network. Additionally, since neurons on a mapping plane share weight, the number of free parameters in the network is reduced.

For example, one of the advantages of convolutional neural networks over traditional image processing algorithms is that it avoids the complicated pre-processing process of images (extracting artificial features, etc.), and can directly input original images for end-to-end learning. One of the advantages of convolutional neural networks over regular neural networks is that regular neural networks use fully connected methods, that is, the neurons from the input layer to the hidden layer are all connected, which will lead to a huge number of parameters, making network training time-consuming and even difficult to train, while convolutional neural networks mitigate this difficulty through methods such as local connections and weight sharing.

Deconvolutional Layer (Deconvolution): A deconvolutional layer, also named as a transposed convolutional layer, operates similarly to a convolutional layer. The main difference is that a deconvolutional layer uses padding to make an output larger than an input (though it can also maintain the same size). If the stride is 1, it means that the output size equals the input size; if the stride is N, it means that the width of the output feature is N times the width of the input feature, and the height of the output feature is N times the height of the input feature.

Generalization Ability: Generalization ability refers to the adaptability of a machine learning algorithm to new samples. The purpose of learning is to discover underlying patterns in the data. A trained network's ability to provide appropriate outputs for data outside the training set that follows the same patterns is referred to as generalization ability.

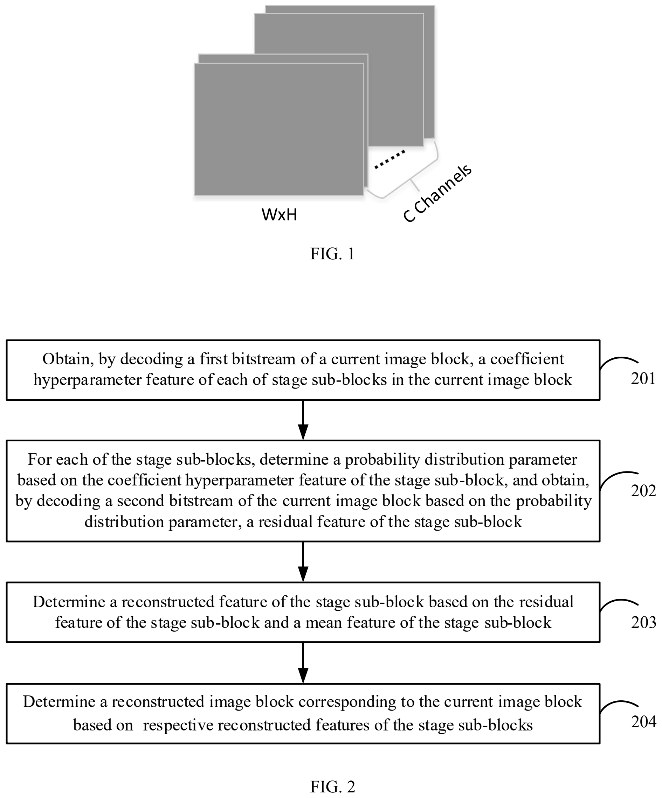

Feature: The features involved in the present disclosure are three-dimensional feature matrices or tensors of size $C \times W \times H$. As shown in FIG. 1, which is a schematic diagram of a three-dimensional feature matrix, C represents the number of channels, H represents the feature height, and W represents the feature width. A three-dimensional feature matrix can be either an input or an output of a neural network.

Rate-Distortion Optimization principle (Rate-Distortion Optimized): There are two major indicators to evaluate coding efficiency: code rate and Peak Signal to Noise Ratio (PSNR). The smaller the bit stream, the greater the compression rate and PSNR, and the better the reconstructed image quality. In mode selection, a discriminant formula is essentially a comprehensive evaluation of the two. For example, a cost corresponding to a mode: $J(\text{mode})=D+\lambda*R$, where D stands for Distortion, which can usually be measured by Sum of Squared Errors (SSE) index. SSE refers to a mean square sum of differences between a reconstructed image block and a source image. In order to realize cost consideration, Sum of Absolute Differences (SAD) index can also be used, and SAD refers to a sum of absolute values of differences between the reconstructed image block and the source image. $\lambda$ is Lagrange multiplier, and R is an actual number of bits required for image block coding in this mode, including total bits required for coding mode information, motion information, residuals, etc. In mode selection, if the coding mode is compared and decided according to the usage of RRO principle, the best coding performance can usually be guaranteed.

For various modules on coding device, numerous coding tools have been proposed, and each tool often has multiple modes. For different video sequences, the coding tools that achieve optimal performance may vary. Therefore, during the encoding process, Rate-Distortion Optimize (RDO) is typically used to compare the coding performance of different tools or modes to select the best tool or mode. After determining the optimal tool or mode, decision information about the tool or mode is conveyed by coding marker information in the bitstream. Although this method increases coding complexity, it adaptively selects the optimal combination of tools or modes for different content, achieving the best coding performance. A decoding device can directly parse flag information to obtain relevant tool or mode information, with minimal impact on complexity.

In the following, the decoding method and coding method in the embodiments of the present disclosure will be described in detail with several embodiments.

Embodiment 1: A decoding method is proposed in an embodiment of the present disclosure, as shown in FIG. 2, which is a schematic flowchart of the decoding method. The method can be performed by a decoding device (also named as a video decoder), and may include the following steps.

Step 201: obtaining, by decoding a first bitstream of a current image block, a coefficient hyperparameter feature of each of stage sub-blocks in the current image block. The current image block is partitioned (divided) into multiple stage sub-blocks, i.e., the current image block includes multiple stage sub-blocks.

Step 202: for each of the stage sub-blocks, determining a probability distribution parameter based on the coefficient hyperparameter feature of the stage sub-block, and obtaining, by decoding a second bitstream of the current image block based on the probability distribution parameter, a residual feature of the stage sub-block.

Step 203: determining a reconstructed feature of the stage sub-block based on the residual feature of the stage sub-block and a mean feature of the stage sub-block. The mean feature of the stage sub-block is obtained based on the coefficient hyperparameter feature of the stage sub-block and/or reference feature of the stage sub-block, such as being obtained based on the coefficient hyperparameter feature alone, or based on the coefficient hyperparameter feature and the reference feature.

Step 204: determining a reconstructed image block corresponding to the current image block based on respective reconstructed features of the stage sub-blocks.

For example, for a first stage sub-block, obtaining the mean feature of the stage sub-block through a mean prediction network and based on the coefficient hyperparameter feature of the stage sub-block, or, obtaining a pre-configured default reference feature, and obtaining the mean feature of the stage sub-block through a mean prediction network and based on the coefficient hyperparameter feature of the stage sub-block and the default reference feature.

For an i-th stage sub-block, where i is greater than 1, obtaining a reference feature of the i-th stage sub-block based on reconstructed features of preceding i-1 stage sub-blocks; and obtaining the mean feature of the stage sub-block through a mean prediction network and based on the coefficient hyperparameter feature of the stage sub-block and the reference feature; where the reference feature includes all of the reconstructed features of the preceding i-1 stage sub-blocks; or, a part of the reconstructed features of the preceding i-1 stage sub-blocks; or, a reconstructed feature of an (i-1)-th stage sub-block.

For example, the mean prediction network may include a first prediction network, a second prediction network and a prediction fusion network; and obtaining the mean feature of the stage sub-block through a mean prediction network and based on the coefficient hyperparameter feature of the stage sub-block and the reference feature may include: obtaining a first prediction feature corresponding to the coefficient hyperparameter feature through the first prediction network; obtaining a second prediction feature corresponding to the reference feature through the second prediction network; and obtaining a concatenated feature by performing feature concatenation on the first prediction feature and the second prediction feature, inputting the concatenated feature into the prediction fusion network, and obtaining the mean feature of the stage sub-block by processing the concatenated feature through the prediction fusion network.

For example, obtaining a first prediction feature corresponding to the coefficient hyperparameter feature through the first prediction network may include: obtaining the first prediction feature by performing feature enhancement operation and upsampling operation on the coefficient hyperparameter feature through the first prediction network. The feature enhancement operation may include: a convolution operation, or include a convolution operation and an activation operation; the upsampling operation may include: a deconvolution operation, a cropping operation, and an activation operation, or include: a deconvolution operation, a cropping operation, an activation operation, and a convolution operation. For example, the activation operation may be a ReLU operation.

For example, obtaining a second prediction feature corresponding to the reference feature through the second prediction network may include: performing feature concatenation on all reconstructed features in the reference feature along a channel dimension, and obtaining the second prediction feature by performing convolution operation on the concatenated feature; or, performing feature summation on all reconstructed features in the reference feature, and obtaining the second prediction feature by performing convolution operation on the summed feature. The reference feature includes all of the reconstructed features of the preceding i-1 stage sub-blocks; or, a part of the reconstructed features of the preceding i-1 stage sub-blocks; or, a reconstructed feature of an (i-1)-th stage sub-block.

For example, obtaining the mean feature of the stage sub-block by processing the concatenated feature through the prediction fusion network may include, but is not limited to: obtaining the mean feature of the stage sub-block by performing convolution operation and at least one fusion operation on the concatenated feature through the prediction fusion network, where the fusion operation includes an activation operation and a convolution operation. For example, the activation operation may be a ReLU operation.

For example, after determining the reconstructed feature of the stage sub-block based on the residual feature of the stage sub-block and the mean feature of the stage sub-block, the method further includes: obtaining an enhanced reconstructed feature by performing feature enhancement on the reconstructed feature of the stage sub-block, where the enhanced reconstructed feature is used to determine a mean feature of a stage sub-block, and the enhanced reconstructed feature is used to determine the reconstructed image block.

For example, determining a reconstructed image block corresponding to the current image block based on respective reconstructed features of the stage sub-blocks may include, but is not limited to: obtaining an aggregated feature by performing feature aggregation on the respective reconstructed features of the stage sub-blocks; and obtaining the reconstructed image block corresponding to the current image block by inputting the aggregated feature into a synthesis transform network; or, obtaining an aggregated feature by performing feature aggregation on the respective reconstructed features of the stage sub-blocks; obtaining partitioned features by partitioning the aggregated feature; obtaining respective partitioned reconstructed image blocks corresponding to the partitioned features by inputting each of the partitioned features into a synthesis transform network; and obtaining the reconstructed image block corresponding to the current image block by merging the respective partitioned reconstructed image blocks corresponding to the partitioned features; or, obtaining respective partitioned reconstructed image blocks corresponding to the stage sub-blocks by inputting each of the reconstructed features of the stage sub-blocks into a synthesis transform network; and obtaining the reconstructed image block corresponding to the current image block by merging the respective partitioned reconstructed image blocks corresponding to the stage sub-blocks.

For example, obtaining an aggregated feature by performing feature aggregation on the respective reconstructed features of the stage sub-blocks may include, but is not limited to: obtaining the aggregated feature by aggregating the respective reconstructed features of the stage sub-blocks according to phase; or, obtaining a plurality of phase-aggregated features by aggregating the respective reconstructed features of the stage sub-blocks according to phase, and obtaining the aggregated feature by concatenating the plurality of phase-aggregated features along a channel dimension.

For example, obtaining partitioned features by partitioning the aggregated feature may include: determining a target size of the partitioned features; and partitioning the aggregated feature into the partitioned features evenly in an order from top to bottom and left to right based on the target size, where a size of each of the partitioned features is the target size; or, determining an actual partition size and an overlap size of the partitioned features, where the actual partition size is a partition size of the partitioned features excluding an overlapping portion, and the overlap size is a size of an overlapping portion between adjacent partitioned features; and partitioning the aggregated feature into the partitioned features based on the actual partition size and the overlap size, where a size of each of the partitioned features is the target size. If the actual partition size is tile_c * tile_w * tile_h and the overlap size is tile_c * padding_w * padding_h, then the target size is tile_c * (tile_w + 2 * padding_w) * (tile_h + 2 * padding_h).

For example, obtaining the reconstructed image block corresponding to the current image block by merging the respective partitioned reconstructed image blocks corresponding to the partitioned features may include, but is not limited to: obtaining the reconstructed image block corresponding to the current image block by sorting the respective partitioned reconstructed image blocks corresponding to the partitioned features in an order from top to bottom and left to right and sequentially concatenating the sorted partitioned reconstructed image blocks corresponding to the plurality of partitioned features; or, determining an actual partition size and an overlap size of each of the respective partitioned reconstructed image blocks; sorting the respective partitioned reconstructed image blocks corresponding to the partitioned features in an order from top to bottom and left to right; obtaining the reconstructed image block corresponding to the current image block by sequentially concatenating the sorted partitioned reconstructed image blocks corresponding to the plurality of partitioned features based on the actual partition size and the overlap size. The reconstructed image block includes a plurality of partitioned reconstructed image blocks, where a non-overlapping portion of a partitioned reconstructed image block has a size equal to the actual partition size of the partitioned reconstructed image block, and an overlapping portion between the partitioned reconstructed image block and an adjacent partitioned reconstructed image block has a size equal to the overlap size of the partitioned reconstructed image block. For a overlapping portion between a left partitioned reconstructed image block and a right partitioned reconstructed image block, a value of the overlapping portion is a value of the left partitioned reconstructed image block, or, a value of the overlapping portion is a mean value of the left partitioned reconstructed image block and the right partitioned reconstructed image block; and for an overlapping portion between an upper partitioned reconstructed image block and a lower partitioned reconstructed image block, a value of the overlapping portion is a value of the upper partitioned reconstructed image block, or, a value of the overlapping portion is a mean value of the upper partitioned reconstructed image block and the lower partitioned reconstructed image block.

For example, obtaining the reconstructed image block corresponding to the current image block by inputting the aggregated feature into the synthesis transform network may include: obtaining a bit rate control parameter of the current image block by decoding an auxiliary bitstream corresponding to the current image block, and obtaining the reconstructed image block corresponding to the current image block by inputting the bit rate control parameter and the aggregated feature into the synthesis transform network.

Obtaining respective partitioned reconstructed image blocks corresponding to the partitioned features by inputting each of the partitioned features into a synthesis transform network may include: obtaining a bit rate control parameter of each of the partitioned features by decoding an auxiliary bitstream corresponding to the current image block, and for each of the partitioned features, obtaining a partitioned reconstructed image block corresponding to the partitioned feature by inputting the partitioned feature and the bit rate control parameter of the partitioned feature into the synthesis transform network.

Obtaining respective partitioned reconstructed image blocks corresponding to the stage sub-blocks by inputting each of the respective reconstructed features of the stage sub-blocks into a synthesis transform network may include: obtaining a bit rate control parameter of each of the stage sub-blocks by decoding an auxiliary bitstream corresponding to the current image block, and for each of the stage sub-blocks, obtaining a partitioned reconstructed image block corresponding to the stage sub-block by inputting the reconstructed feature of the stage sub-block and the bit rate control parameter of the stage sub-block into the synthesis transform network.

For example, obtaining the reconstructed image block corresponding to the current image block by inputting the bit rate control parameter and the aggregated feature into the synthesis transform network may include: obtaining a first feature by processing the aggregated feature through the synthesis transform network; obtaining a second feature by processing the bit rate control parameter through the synthesis transform network; generating a third feature based on the first feature and the second feature; and determining the reconstructed image block corresponding to the current image block based on the third feature.

Obtaining a partitioned reconstructed image block corresponding to the partitioned feature by inputting the partitioned feature and the bit rate control parameter of the partitioned feature into the synthesis transform network may include: obtaining a first feature by processing the partitioned feature through the synthesis transform network; obtaining a second feature by processing the bit rate control parameter of the partitioned feature through the synthesis transform network; generating a third feature based on the first feature and the second feature; and determining the partitioned reconstructed image block corresponding to the partitioned feature based on the third feature.

Obtaining a partitioned reconstructed image block corresponding to the stage sub-block by inputting a reconstructed feature of the stage sub-block and the bit rate control parameter of the stage sub-block into the synthesis transform network may include: obtaining a first feature by processing the reconstructed feature of the stage sub-block through the synthesis transform network; obtaining a second feature by processing the bit rate control parameter of the stage sub-block through the synthesis transform network; generating a third feature based on the first feature and the second feature; and determining the partitioned reconstructed image block corresponding to the stage sub-block based on the third feature.

For example, the above execution order is only for the convenience of describing the given example. In practical application, the execution order between steps can also be changed, and there is no restriction on this execution order. Moreover, in other embodiments, the steps of the corresponding method are not necessarily executed in the order shown and described in the present disclosure, and the method may include more or less steps than those described in the present disclosure. In addition, a single step described in the present disclosure may be decomposed into multiple steps for description in other embodiments. The steps described in the present disclosure may be combined into a single step in other embodiments.

As can be seen from the above technical solutions, in the embodiments of the present disclosure, for neural network-based coding and decoding technologies, a rate-variable and adjustable coding and decoding solution is proposed. This solution improves parallelism, effectively saves feature storage cache, achieves higher rate control accuracy, incurs less coding performance loss, and provides better coding performance and rate control accuracy. By using block-based coding and decoding, peak memory usage is reduced, the decoding time for a single block is minimized, and high-speed parallel decoding capability is achieved. This ensures the quality of reconstructed image blocks while maintaining low complexity for the neural network, improves coding and decoding performance, and reduces complexity.

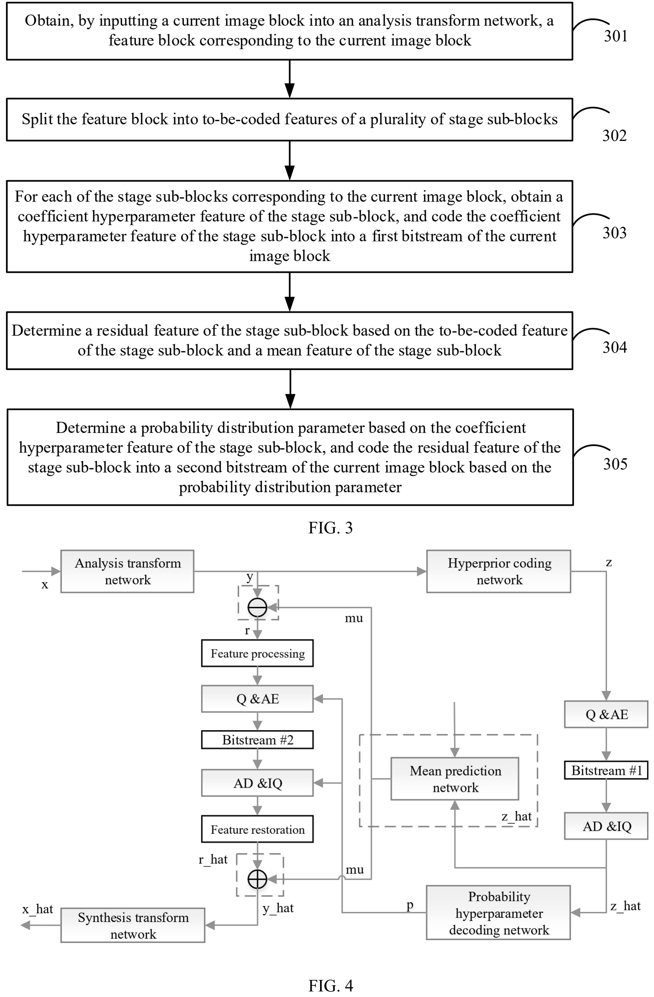

Embodiment 2: A coding method is proposed in an embodiment of the present disclosure, as shown in FIG. 3, which is a schematic flowchart of the coding method. The method can be performed by a coding device (also named as a video coder), and may include the following steps.

Step 301: obtaining, by inputting a current image block into an analysis transform network, a feature block corresponding to the current image block.

Step 302: splitting the feature block into to-be-coded features of a plurality of stage sub-blocks.

Step 303: for each of the stage sub-blocks corresponding to the current image block, obtaining a coefficient hyperparameter feature of the stage sub-block, and coding the coefficient hyperparameter feature of the stage sub-block into a first bitstream of the current image block.

Step 304: determining a residual feature of the stage sub-block based on the to-be-coded feature of the stage sub-block and a mean feature of the stage sub-block. The mean feature of the stage sub-block is obtained based on the coefficient hyperparameter feature of the stage sub-block and/or reference feature of the stage sub-block, such as being obtained based on the coefficient hyperparameter feature alone, or based on the coefficient hyperparameter feature and the reference feature.

Step 305: determining a probability distribution parameter based on the coefficient hyperparameter feature of the stage sub-block, and coding the residual feature of the stage sub-block into a second bitstream of the current image block based on the probability distribution parameter.

For example, for a first stage sub-block, obtaining the mean feature of the stage sub-block through a mean prediction network and based on the coefficient hyperparameter feature of the stage sub-block, or, obtaining a pre-configured default reference feature, and obtaining the mean feature of the stage sub-block through a mean prediction network and based on the coefficient hyperparameter feature of the stage sub-block and the default reference feature.

For an i-th stage sub-block, where i is greater than 1, obtaining a reference feature of the i-th stage sub-block based on reconstructed features of preceding i-1 stage sub-blocks; and obtaining the mean feature of the stage sub-block through a mean prediction network and based on the coefficient hyperparameter feature of the stage sub-block and the reference feature; where the reference feature includes all of the reconstructed features of the preceding i-1 stage sub-blocks; or, a part of the reconstructed features of the preceding i-1 stage sub-blocks; or, a reconstructed feature of an (i-1)-th stage sub-block.

For example, the processing procedure at the coding device is similar to that at the decoding device, and redundant descriptions of similar aspects are omitted herein.

For example, the above execution order is only for the convenience of describing the given example. In practical application, the execution order between steps can also be changed, and there is no restriction on this execution order. Moreover, in other embodiments, the steps of the corresponding method are not necessarily executed in the order shown and described in the present disclosure, and the method may include more or less steps than those described in the present disclosure. In addition, a single step described in the present disclosure may be decomposed into multiple steps for description in other embodiments. The steps described in the present disclosure may be combined into a single step in other embodiments.

As can be seen from the above technical solutions, in the embodiments of the present disclosure, for neural network-based coding and decoding technologies, a rate-variable and adjustable coding and decoding solution is proposed. This solution improves parallelism, effectively saves feature storage cache, achieves higher rate control accuracy, incurs less coding performance loss, and provides better coding performance and rate control accuracy. By using block-based coding and decoding, peak memory usage is reduced, the decoding time for a single block is minimized, and high-speed parallel decoding capability is achieved. This ensures the quality of reconstructed image blocks while maintaining low complexity for the neural network, improves coding and decoding performance, and reduces complexity.

Embodiment 3: Regarding Embodiments 1 and 2, the processing procedure at the coding device can be referred to in FIG. 4. Of course, FIG. 4 is merely an example of the processing procedure at the coding device, and no limitation is imposed on this coding device processing procedure.

After obtaining a current image block x (which can be an original image block x, i.e., an input image block), the coding device (coding device) can perform analysis transform on the current image block x through an analysis transform network (i.e., a neural network) to obtain an image feature y corresponding to the current image block x. Here, performing feature transform on the current image block x through the analysis transform network refers to: transforming the current image block x into the image feature y in a latent domain, thereby facilitating subsequent operations to be performed in the latent domain.

An image can be divided into one image block or multiple image blocks. If the image is divided into one image block, then the current image block x can also be the image itself, meaning the coding/decoding process for an image block can also be directly applied to an image.

After obtaining the image feature y, the coding device performs coefficient hyperparameter feature transform on the image feature y to obtain a coefficient hyperparameter feature z. For example, the image feature y can be input to a hyperprior coding network (i.e., a neural network), which performs the coefficient hyperparameter feature transform on the image feature y to obtain the coefficient hyperparameter feature z. The hyperprior coding network can be a pre-trained neural network, and no limitation is imposed on its training process, as long as it can perform coefficient hyperparameter feature transform on the image feature y. Here, the image feature y in the latent domain, after passing through the hyperprior coding network, yields hyperprior latent information z (i.e., the coefficient hyperparameter feature z).

After obtaining the coefficient hyperparameter feature z, the coding device may quantize the coefficient hyperparameter feature z to obtain a hyperparameter quantization feature corresponding to the coefficient hyperparameter feature z (the Q operation in FIG. 4 represents the quantization process). After obtaining the hyperparameter quantization feature corresponding to the coefficient hyperparameter feature z, the coding device codes the hyperparameter quantization feature to obtain Bitstream #1 (i.e., the first bitstream) corresponding to the current image block (the AE operation in FIG. 4 represents the coding process, such as entropy encoding). Or, the coding device may directly code the coefficient hyperparameter feature z to obtain Bitstream #1 corresponding to the current image block. The hyperparameter quantization feature or the coefficient hyperparameter feature z carried in Bitstream #1 are primarily used to obtain a mean and a parameter of a probability distribution model (i.e., the probability distribution parameter).

After obtaining Bitstream #1 corresponding to the current image block, the coding device may send the Bitstream#1 corresponding to the current image block to the decoding device (decoding device). The processing procedure at the decoding device for Bitstream #1 corresponding to the current image block is described in subsequent embodiments.

After obtaining Bitstream #1 corresponding to the current image block, the coding device may also decode Bitstream #1 to obtain a hyperparameter quantization feature (the AD in FIG. 4 represents the decoding process). Then, it performs dequantization on the hyperparameter quantization feature to obtain a coefficient hyperparameter feature z_hat. The coefficient hyperparameter feature z_hat may be the same as or different from the coefficient hyperparameter feature z. The IQ operation in FIG. 4 represents the dequantization process (or named as inverse quantization process). Or, after obtaining Bitstream #1 corresponding to the current image block, the coding device may decode Bitstream #1 to obtain the coefficient hyperparameter feature z_hat directly, without involving a dequantization process for the coefficient hyperparameter feature z_hat.

For the coding process of Bitstream #1, a coding method based on a fixed probability density model may be used. For the decoding process of Bitstream #1, a decoding method based on a fixed probability density model may be used. No limitation is imposed on these coding and decoding processes.

After obtaining the coefficient hyperparameter feature z_hat, the coding device may perform context-based prediction using z_hat of the current image block and an image feature y_hat of a preceding image block (a process for determining image feature y_hat is described in subsequent embodiments) to obtain a predicted value mu (i.e., the mean mu) for the current image block. For example, the coefficient hyperparameter feature z_hat and the image feature y_hat are input to a mean prediction network, which determines the predicted value mu based on the coefficient hyperparameter feature z_hat and the image feature y_hat. No limitation is imposed on this prediction process. In this context-based prediction process, the inputs include the coefficient hyperparameter feature z_hat and the already decoded image feature y_hat; both are jointly input to obtain a more accurate predicted value mu. The predicted value mu is used to obtain a residual by differencing with an original feature, and to obtain a reconstructed feature y_hat by summing with a decoded residual.

It should be noted that the mean prediction network is an optional neural network; that is, the mean prediction network might not be present, and the predicted value mu might not need to be determined through the mean prediction network. The dashed box in FIG. 4 indicates that the mean prediction network is optional.

After obtaining the image feature y, the coding device may determine a residual feature r based on the image feature y and the predicted value mu, for example, by taking a difference between the image feature y and the predicted value mu as the residual feature r. Then, the residual feature r is processed to obtain an image feature s. There is no restriction on the feature processing process, and any feature processing method can be used. In this case, the mean prediction network needs to be deployed to provide the predicted value mu. Or, after obtaining the image feature y, the coding device may perform feature processing on the image feature y directly to obtain the image feature s. There is no restriction on the feature processing process, and any feature processing method can be used. In this case, the mean prediction network does not need to be deployed. The dashed box indicates that the residual process is optional.

After obtaining the image feature s, the coding device may quantize the image feature s and obtain an image quantization feature corresponding to the image feature s (the Q operation in FIG. 4 represents the quantization process). After obtaining the image quantization feature corresponding to the image feature s, the coding device codes the image quantization feature to obtain Bitstream #2 (i.e., the second bitstream) corresponding to the current image block (the AE operation in FIG. 4 represents the coding process, such as entropy encoding). Or, the coding device may directly code the image feature s to obtain Bitstream #2 corresponding to the current image block, without involving quantization of the image feature s.

After obtaining Bitstream #2 corresponding to the current image block, the coding device may send the Bitstream#2 corresponding to the current image block to the decoding device. The processing procedure at the decoding device for Bitstream #2 corresponding to the current image block is described in subsequent embodiments.

After obtaining Bitstream #2 corresponding to the current image block, the coding device may also decode Bitstream #2 to obtain an image quantization feature (the AD in FIG. 4 represents the decoding process). Then, the coding device may dequantize the image quantization feature to obtain an image feature s'. The image feature s' may be the same as or different from the image feature s. The IQ operation in FIG. 4 represents the dequantization process. Or, after obtaining Bitstream #2 corresponding to the current image block, the coding device may decode Bitstream #2 to obtain the image feature s' directly, without involving a dequantization process for the image quantization feature.

After obtaining the image feature s', the coding device may perform feature restoration on the image feature s' (i.e., an inverse process of feature processing). There is no restriction on this feature restoration process, and any feature restoration method can be used to obtain a residual feature r_hat. The residual feature r_hat may be the same as or different from the residual feature r. After obtaining the residual feature r_hat, the coding device determines the image feature y_hat based on the residual feature r_hat and the predicted value mu. The image feature y_hat may be the same as or different from the image feature y. For example, a sum of the residual feature r_hat and the predicted value mu is used as the image feature y_hat. In this case, the mean prediction network needs to be deployed to provide the predicted value mu. Or, after obtaining the image feature s', the coding device may perform feature restoration on the image feature s' (i.e., the inverse process of feature processing) to obtain the image feature y_hat. The image feature y_hat may be the same as or different from the image feature y. In this case, the mean prediction network does not need to be deployed. The dashed box indicates that the residual process is optional.

After obtaining the image feature y_hat, the coding device may perform a synthesis transformation on the image feature y_hat to obtain a reconstructed image block x_hat corresponding to the current image block x. For example, the image feature y_hat is input into the synthesis transform network, which performs a synthesis transformation on the image feature y_hat to obtain the reconstructed image block x_hat. This completes the image reconstruction process.

In a possible implementation, when coding the image quantization feature or image feature s to obtain Bitstream#2 corresponding to the current image block, the coding device first needs to determine a probability distribution model and then codes the image quantization feature or image feature s based on the probability distribution model. In addition, when decoding Bitstream#2, the coding device also needs to first determine the probability distribution model and then decode Bitstream#2 based on the probability distribution model.

To obtain the probability distribution model, and continuing to refer to FIG. 4, after obtaining the coefficient hyperparameter feature z_hat, the coding device may perform an inverse coefficient hyperparameter feature transform on the coefficient hyperparameter feature z_hat to obtain a probability distribution parameter p. For example, the coefficient hyperparameter feature z_hat is input to a probability hyperparameter decoding network, which performs the inverse coefficient hyperparameter feature transform on the coefficient hyperparameter feature z_hat to obtain the probability distribution parameter p. After obtaining the probability distribution parameter p, the probability distribution model can be generated based on the probability distribution parameter p. The probability hyperparameter decoding network can be a pre-trained neural network, and no limitation is imposed on its training process, as long as it can perform the inverse coefficient hyperparameter feature transform on the coefficient hyperparameter feature z_hat.

In a possible implementation, the aforementioned processing procedures at the coding device can be executed by a deep learning model or a neural network model, thereby achieving an end-to-end image compression and coding process. No limitation is imposed on this coding process.

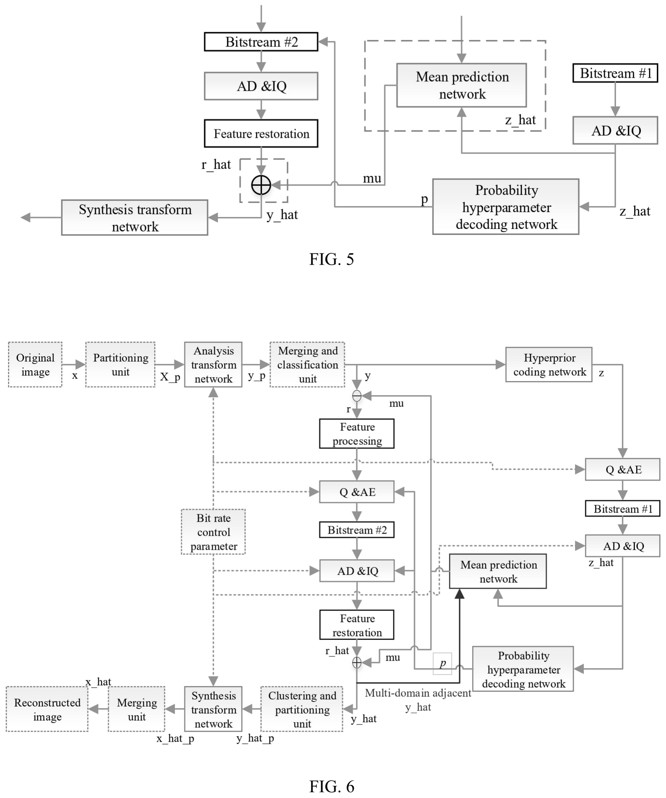

Embodiment 4: Regarding Embodiments 1 and 2, the processing procedure at the decoding device can be referred to in FIG. 5. Of course, FIG. 5 is merely an example of the processing procedure at the decoding device, and no limitation is imposed on this decoding device processing procedure.

After obtaining Bitstream #1 corresponding to a current image block, the decoding device may also decode Bitstream #1 to obtain a hyperparameter quantization feature (the AD in FIG. 5 represents the decoding process). Then, it performs dequantization on the hyperparameter quantization feature to obtain a coefficient hyperparameter feature z_hat. The coefficient hyperparameter feature z_hat may be the same as or different from a coefficient hyperparameter feature z. The IQ operation in FIG. 5 represents the dequantization process. Or, after obtaining Bitstream #1 corresponding to the current image block, the decoding device may decode Bitstream #1 to obtain the coefficient hyperparameter feature z_hat directly, without involving a dequantization process for the coefficient hyperparameter feature z_hat.

For the decoding process of Bitstream #1, a decoding method based on a fixed probability density model may be used. No limitation is imposed on this process.

An image can be divided into one image block or multiple image blocks. If the image is divided into one image block, then the current image block x can also be the image itself, meaning the decoding process for an image block can also be directly applied to an image.

After obtaining the coefficient hyperparameter feature z_hat, the decoding device may perform context-based prediction using z_hat of the current image block and an image feature y_hat of a preceding image block (a process for determining image feature y_hat is described in subsequent embodiments) to obtain a predicted value mu (i.e., the mean mu) for the current image block. For example, the coefficient hyperparameter feature z_hat and the image feature y_hat are input to a mean prediction network, which determines the predicted value mu based on the coefficient hyperparameter feature z_hat and the image feature y_hat. No limitation is imposed on this prediction process. In this context-based prediction process, the inputs include the coefficient hyperparameter feature z_hat and the already decoded image feature y_hat; both are jointly input to obtain a more accurate predicted value mu.

It should be noted that the mean prediction network is an optional neural network; that is, the mean prediction network might not be present, and the predicted value mu might not need to be determined through the mean prediction network. The dashed box in FIG. 5 indicates that the mean prediction network is optional.

After obtaining Bitstream #2 corresponding to the current image block, the decoding device may also decode Bitstream #2 to obtain an image quantization feature (the AD in FIG. 5 represents the decoding process). Then, the decoding device may dequantize the image quantization feature to obtain an image feature s'. The image feature s' may be the same as or different from the image feature s. The IQ operation in FIG. 5 represents the dequantization process. Or, after obtaining Bitstream #2 corresponding to the current image block, the decoding device may decode Bitstream #2 to obtain the image feature s' directly, without involving a dequantization process for the image quantization feature.

After obtaining the image feature s', the decoding device may perform feature restoration on the image feature s' (i.e., an inverse process of feature processing) to obtain a residual feature r_hat. The residual feature r_hat may be the same as or different from the residual feature r. After obtaining the residual feature r_hat, the decoding device determines the image feature y_hat based on the residual feature r_hat and the predicted value mu. The image feature y_hat may be the same as or different from the image feature y. For example, a sum of the residual feature r_hat and the predicted value mu is used as the image feature y_hat. In this case, the mean prediction network needs to be deployed to provide the predicted value mu. Or, after obtaining the image feature s', the decoding device may perform feature restoration on the image feature s' to obtain the image feature y_hat. The image feature y_hat may be the same as or different from the image feature y. In this case, the mean prediction network does not need to be deployed. The dashed box indicates that the residual process is optional.

After obtaining the image feature y_hat, the decoding device may perform a synthesis transformation on the image feature y_hat to obtain a reconstructed image block x_hat corresponding to the current image block x. For example, the image feature y_hat is input into the synthesis transform network, which performs a synthesis transformation on the image feature y_hat to obtain the reconstructed image block x_hat. This completes the image reconstruction process.

In a possible implementation, when decoding Bitstream#2, the decoding device first needs to determine the probability distribution model and then decode Bitstream#2 based on the probability distribution model. To obtain the probability distribution model, and continuing to refer to FIG. 5, after obtaining the coefficient hyperparameter feature z_hat, the decoding device may perform an inverse coefficient hyperparameter feature transform on the coefficient hyperparameter feature z_hat to obtain a probability distribution parameter p. For example, the coefficient hyperparameter feature z_hat is input to a probability hyperparameter decoding network, which performs the inverse coefficient hyperparameter feature transform on the coefficient hyperparameter feature z_hat to obtain the probability distribution parameter p. After obtaining the probability distribution parameter p, the probability distribution model can be generated based on the probability distribution parameter p. The probability hyperparameter decoding network can be a pre-trained neural network, and no limitation is imposed on its training process, as long as it can perform the inverse coefficient hyperparameter feature transform on the coefficient hyperparameter feature z_hat to obtain the probability distribution parameter p.

In a possible implementation, the aforementioned processing procedures at the decoding device can be executed by a deep learning model or a neural network model, thereby achieving an end-to-end image compression and coding process. No limitation is imposed on this decoding process.

Embodiment 5: Regarding Embodiments 1, 2, 3, and 4, a mean prediction network may or may not be deployed. To enhance feature coding performance, the case of deploying the mean prediction network is taken as an example. When deploying the mean prediction network, to obtain an accurate predicted value for an image feature, it is necessary to use reconstructed values of adjacent features (i.e., a context-based prediction is performed based on the coefficient hyperparameter feature z_hat of the current image block and the image feature y_hat of the previous image block to obtain the predicted value mu corresponding to the current image block). Therefore, a feature value on the right (using a reconstructed value of a feature on the left or upper left as a reference) can only be coded after the feature value on the left or upper left is completely reconstructed. This dependency means that the coding of features can only be performed serially, not in parallel, resulting in high complexity.

To address the above finding, in this embodiment, by using block-based coding and decoding, which can improve parallelism, effectively save feature storage cache, achieve higher rate control accuracy, incur less coding performance loss, and provide better coding performance and rate control accuracy. This leads to lower peak memory usage, reduced decoding time per block, and high-speed parallel decoding capability.

The processing procedure at the coding device can be referred to in FIG. 6, and no limitation is imposed on this coding device processing procedure.

1. After obtaining an original image x, a partitioning unit determines whether to partition the original image x based on an image resolution. For example, if the image resolution is greater than a threshold, the original image x is partitioned; otherwise, the original image x is not partitioned. If yes, the original image x is divided into several image blocks x_p, with overlapping portions between adjacent image blocks. If not, the image block x_p is the original image x itself, meaning the original image x consists of only one image block. Each image block x_p can be denoted as a current image block. For convenience of description, the subsequent explanation uses the processing of one current image block x_p as an example.

2. After obtaining the current image block x_p, an analysis transform network performs analysis transform on x_p to obtain an image feature y_p (feature block y_p) corresponding to the current image block x_p. For example, the analysis transform network transforms the current image block x_p into the image feature y_p in the latent domain, facilitating subsequent operations in the latent domain.

3. A merging and classification unit performs merging and classification on the image feature y_p to obtain to-be-coded features y_i (i=1...N) for N stage sub-blocks, i.e., it splits the image feature y_p into the to-be-coded features y_i for N stage sub-blocks.

4. For each of stage sub-blocks corresponding to the current image block, a coefficient hyperparameter feature corresponding to the stage sub-block is acquired. For example, coefficient hyperparameter feature transform is performed on the to-be-coded feature $y\_i$ of stage sub-block i to obtain a coefficient hyperparameter feature $z\_i$ corresponding to stage sub-block i. For example, the to-be-coded feature $y\_i$ can be input to a hyperprior coding network (i.e., a neural network), which performs the coefficient hyperparameter feature transform on $y\_i$ to obtain the coefficient hyperparameter feature $z\_i$.

5. For each of the stage sub-blocks corresponding to the current image block, the coefficient hyperparameter feature of the stage sub-block is coded into a first bitstream (Bitstream #1) of the current image block. For example, the coefficient hyperparameter feature $z\_i$ corresponding to stage sub-block i is quantized to obtain a hyperparameter quantization feature corresponding to the coefficient hyperparameter feature $z\_i$, and the hyperparameter quantization feature is coded to obtain the first bitstream for the current image block. Or, the coefficient hyperparameter feature $z\_i$ corresponding to stage sub-block i is directly coded to obtain the first bitstream corresponding to the current image block. After obtaining the first bitstream corresponding to the current image block, the coding device may send the first bitstream corresponding to the current image block to the decoding device. The processing procedure at the decoding device for the first bitstream corresponding to the current image block is described in subsequent embodiments.

6. After obtaining the first bitstream corresponding to the current image block, it may also be decoded to obtain the coefficient hyperparameter features for each of the stage sub-blocks of the current image block, such as a coefficient hyperparameter feature $z\_hat\_i$ corresponding to stage sub-block i (i=1...N).

For example, the first bitstream can be decoded to obtain the hyperparameter quantization feature for stage sub-block i, which is then dequantized to obtain the coefficient hyperparameter feature $z\_hat\_i$ for stage sub-block i. Or, the first bitstream can be decoded to obtain the coefficient hyperparameter feature $z\_hat\_i$ for stage sub-block i directly, without involving a dequantization process.

For the coding process of the first bitstream, a coding method based on a fixed probability density model may be used. For the decoding process of the first bitstream, a decoding method based on a fixed probability density model may be used. No limitation is imposed on these coding and decoding processes.

7. For each of the stage sub-blocks corresponding to the current image block, a probability distribution parameter is determined based on the coefficient hyperparameter feature of the stage sub-block. For example, an inverse coefficient hyperparameter feature transform can be performed on the coefficient hyperparameter feature $z\_hat\_i$ corresponding to stage sub-block i to obtain a probability distribution parameter $p\_i$ for stage sub-block i. For example, the coefficient hyperparameter feature $z\_hat\_i$ is input to a probability hyperparameter decoding network, which performs the inverse coefficient hyperparameter feature transform on the coefficient hyperparameter feature $z\_hat\_i$ to obtain the probability distribution parameter $p\_i$. After obtaining the probability distribution parameter $p\_i$, a probability distribution model can be generated based on the probability distribution parameter $p\_i$.

8. After obtaining the to-be-coded features for the N stage sub-blocks, for a to-be-coded feature $y\_1$ of a first stage sub-block, its coefficient hyperparameter feature $z\_hat\_1$ is input to a mean prediction network to obtain a mean feature (i.e., predicted value $mu\_1$, mean $mu\_1$) of the stage sub-block. Or, a pre-configured default reference feature is acquired and the coefficient hyperparameter feature $z\_hat\_1$ and the default reference feature of the stage sub-block are input into the mean prediction network to obtain the mean feature of the stage sub-block.

A residual feature $r\_1$ is determined based on the to-be-coded feature $y\_1$ and the mean feature $mu\_1$ of the first stage sub-block, for example, by taking a difference between the to-be-coded feature $y\_1$ and the mean feature $mu\_1$ as the residual feature $r\_1$. Then, feature processing is performed on the residual feature $r\_1$ to obtain a processed residual feature $r\_1$. There is no restriction on the feature processing process, and any feature processing method can be used. Of course, feature processing is an optional step; the residual feature $r\_1$ might not undergo feature processing.

The residual feature $r\_1$ (or the processed residual feature $r\_1$) is quantized to obtain an image quantization feature, and the image quantization feature is coded to obtain a second bitstream (Bitstream#2) corresponding to the current image block. Or, the residual feature $r\_1$ (or the processed residual feature $r\_1$) is directly coded to obtain the second bitstream corresponding to the current image block. After obtaining the second bitstream corresponding to the current image block, the coding device may send the second bitstream corresponding to the current image block to the decoding device. The processing procedure at the decoding device for the second bitstream corresponding to the current image block is described in subsequent embodiments. When coding the image quantization feature or residual feature $r\_1$, a probability distribution model corresponding to a probability distribution parameter $p\_1$ of the first stage sub-block can be used to code the image quantization feature or residual feature $r\_1$ to obtain the second bitstream.

After obtaining the second bitstream, the probability distribution model corresponding to the probability distribution parameter $p\_1$ of the first stage sub-block can be used to decode the second bitstream to obtain an image quantization feature, dequantize the image quantization feature, and perform feature restoration on the dequantized feature to obtain a residual feature $r\_hat\_1$. Or, the residual feature $r\_hat\_1$ can be directly obtained after dequantizing the image quantization feature without involving a feature restoration process. Or, after decoding the second bitstream, feature restoration is performed on the decoded feature to obtain the residual feature r_hat_1, or the residual feature r_hat_1 is directly obtained after decoding the second bitstream.

After obtaining the residual feature r_hat_1, a reconstructed feature y_hat_1 of the first stage sub-block is determined based on the residual feature r_hat_1 and the mean feature mu_1. For example, a sum of the residual feature r_hat_1 and the mean feature mu_1 is taken as the reconstructed feature y_hat_1.

9. After obtaining the to-be-coded features for the N stage sub-blocks, for a to-be-coded feature y_i of an i-th stage sub-block (i>1 and i<N), a coefficient hyperparameter feature z_hat_i of stage sub-block i and a reference feature of stage sub-block i are input to the mean prediction network to obtain a mean feature (i.e., predicted value mu_i, mean mu_i) for stage sub-block i.

Here, the reference feature of stage sub-block i (the i-th stage sub-block) can be acquired based on reconstructed features of preceding i-1 stage sub-blocks, i.e., based on reconstructed features y_hat_1 to y_hat_i-1. For example, the reference feature of stage sub-block i is obtained based on all reconstructed features from y_hat_1 to y_hat_i-1, i.e., the reference features include y_hat_1 to y_hat_i-1. Or, the reference feature of stage sub-block i is obtained based on partially reconstructed features from y_hat_1 to y_hat_i-1, i.e., the reference features include partially reconstructed features from y_hat_1 to y_hat_i-1. Or, the reference feature of stage sub-block i is obtained based on a reconstructed feature of an (i-1)-th stage sub-block, i.e., the reference feature of stage sub-block i is y_hat_i-1.

A residual feature r_i is determined based on the to-be-coded feature y_i and the mean feature mu_i of the i-th stage sub-block, for example, by taking a difference between the to-be-coded feature y_i and the mean feature mu_i as the residual feature r_i. Feature processing is performed on the residual feature r_i to obtain a processed residual feature r_i. Of course, the residual feature r_i might not undergo feature processing.

The residual feature r_i (or the processed residual feature r_i) is quantized to obtain an image quantization feature, and the image quantization feature is coded to obtain the second bitstream corresponding to the current image block. Or, the residual feature r_i (or the processed residual feature r_i) is directly coded to obtain the second bitstream corresponding to the current image block. The second bitstream corresponding to the current image block is sent to the decoding device. The processing procedure at the decoding device for the second bitstream corresponding to the current image block is described in subsequent embodiments. When coding the image quantization feature or residual feature r_i, a probability distribution model corresponding to a probability distribution parameter p_i of the i-th stage sub-block can be used to code the image quantization feature or residual feature r_i to obtain the second bitstream.

After obtaining the second bitstream, the probability distribution model corresponding to the probability distribution parameter p_i of the i-th stage sub-block can be used to decode the second bitstream to obtain an image quantization feature, dequantize the image quantization feature, and perform feature restoration on the dequantized feature to obtain a residual feature r_hat_i. Or, the residual feature r_hat_i can be directly obtained after dequantizing the image quantization feature. Or, after decoding the second bitstream, feature restoration is performed on the decoded feature to obtain the residual feature r_hat_i, or the residual feature r_hat_i is directly obtained after decoding the second bitstream.

After obtaining the residual feature r_hat_i, a reconstructed feature y_hat_i of the i-th stage sub-block is determined based on the residual feature r_hat_i and the mean feature mu_i. For example, a sum of the residual feature r_hat_i and the mean feature mu_i is taken as the reconstructed feature y_hat_i.

10. A clustering and partitioning unit obtains reconstructed features y_hat_i (i=1...N) for the N stage sub-blocks and performs feature aggregation on the reconstructed features y_hat_i for the N stage sub-blocks to obtain an aggregated feature. Then, the clustering and partitioning unit partitions the aggregated feature to obtain at least one partitioned feature y_hat_p, i.e., feature block y_hat_p.

11. For each partitioned feature y_hat_p, the clustering and partitioning unit inputs the partitioned feature y_hat_p into a synthesis transform network, and the synthesis transform network outputs a partitioned reconstructed image block x_hat_p corresponding to the partitioned feature y_hat_p.

12. A merging unit obtains partitioned reconstructed image blocks x_hat_p corresponding to multiple partitioned features y_hat_p and merges these partitioned reconstructed image blocks x_hat_p to obtain a reconstructed image block x_hat corresponding to the current image block. Obviously, if the original image x is divided into multiple current image blocks x_p, then reconstructed image blocks x_hat corresponding to all current image blocks x_p can form a reconstructed image. If the original image x corresponds to one current image block x_p, then the reconstructed image block x_hat is the reconstructed image.

In the above process, the coding device can also assign different bit rate control parameters to different stage sub-blocks of different image blocks based on regions of interest or bit rate information, so that different stage sub-blocks of different image blocks consume different bit rates.

For example, if special processing (e.g., non-uniform processing to ensure higher quality in the region of interest) is needed for a region of interest, to avoid uniform quantization distortion for every image block, the bit rate control parameter can be a quantization parameter (the bit rate control parameter needs to be transmitted to the decoding device via a bitstream). As shown in FIG. 6, the bit rate control parameter influences quantization (Q) and dequantization (IQ) processes for the first bitstream, and also influences quantization (Q) and dequantization (IQ) processes for the second bitstream.

For example, when quantizing the coefficient hyperparameter feature $z\_i$ corresponding to stage sub-block i, if stage sub-block i is located within the region of interest, the bit rate control parameter is used to quantize the coefficient hyperparameter feature $z\_i$ corresponding to stage sub-block i. The rate control parameter is used to ensure that the image quality corresponding to the stage sub-block i is higher. When dequantizing the hyperparameter quantization feature corresponding to stage sub-block i, the bit rate control parameter also needs to be used to dequantize the hyperparameter quantization feature corresponding to stage sub-block i.

When quantizing the residual feature $r\_i$ (or the processed residual feature $r\_i$) corresponding to the stage sub-block i, if the stage sub-block i is located in the region of interest, the bit rate control parameter is used to quantize the residual feature $r\_i$ corresponding to the stage sub-block i. The rate control parameter is used to ensure that the image quality corresponding to the stage sub-block i is higher. When dequantizing the image quantization feature corresponding to stage sub-block i, the bit rate control parameter also needs to be used to dequantize the image quantization feature corresponding to stage sub-block i.

For example, for precise bit rate control, the bit rate control parameter can be a control parameter for the synthesis transform network (the bit rate control parameter needs to be transmitted to the decoding device via a bitstream). As shown in FIG. 6, the bit rate control parameter influences both the analysis transform network and the synthesis transform network. For example, when the analysis transform network performs analysis transform on the current image block $x\_p$, the bit rate control parameter and the current image block $x\_p$ are input to the analysis transform network, and the analysis transform network outputs the image feature $y\_p$ corresponding to the current image block $x\_p$. When inputting the partitioned feature $y\_hat\_p$ into the synthesis transform network, the partitioned feature $y\_hat\_p$ and the bit rate control parameter are input to the synthesis transform network, and the synthesis transform network outputs the partitioned reconstructed image block $x\_hat\_p$ corresponding to the partitioned feature $y\_hat\_p$.

Based on a pre-configured target bit rate (each image block corresponds to one target bit rate, or each image corresponds to one target bit rate, or multiple images correspond to one target bit rate), the coding device can attempt to apply different bit rate control parameters. After applying a specific bit rate control parameter, if a bit rate corresponding to a bitstream (e.g., the first bitstream and the second bitstream) for the current image block matches or approximates the target bit rate (i.e., a difference between them is less than a threshold), then the bit rate control parameter is ultimately adopted. The coding device may then transmit the bit rate control parameter to the decoding device.

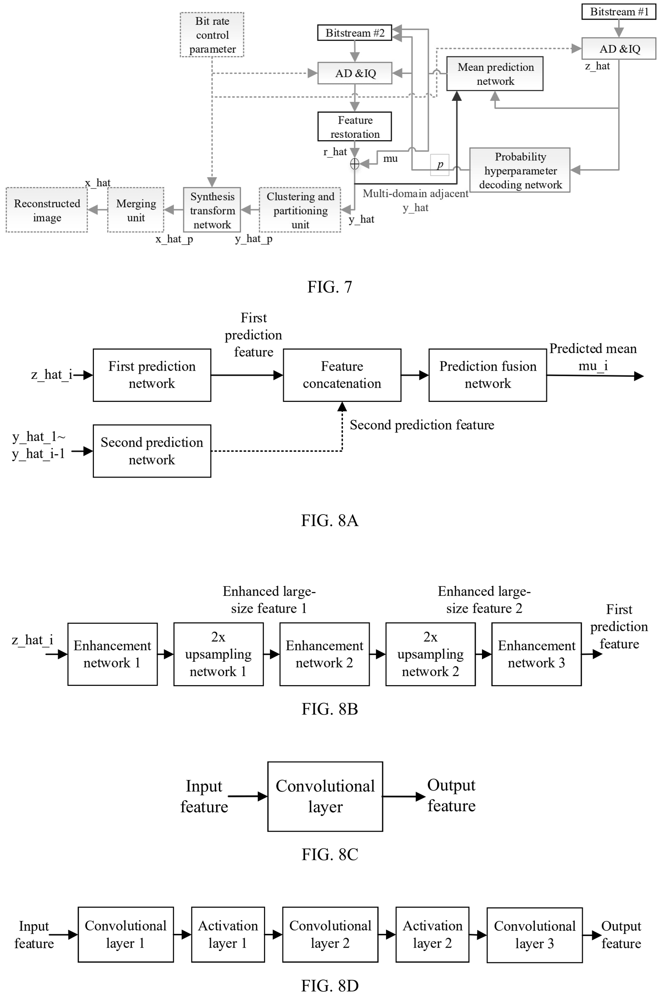

Embodiment 6: The processing procedure at the decoding device can be referred to in FIG. 7, and no limitation is imposed on this decoding device processing procedure.

1. After obtaining a first bitstream (Bitstream #1) corresponding to a current image block, decode the first bitstream to obtain coefficient hyperparameter features for each of stage sub-blocks in the current image block, such as a coefficient hyperparameter feature $z\_hat\_i$ corresponding to stage sub-block i (i=1...N).

For example, the first bitstream can be decoded to obtain a hyperparameter quantization feature for stage sub-block i, which is then dequantized to obtain the coefficient hyperparameter feature $z\_hat\_i$ for stage sub-block i. Or, the first bitstream can be decoded to obtain the coefficient hyperparameter feature $z\_hat\_i$ for stage sub-block i directly, without involving a dequantization process. For the decoding process of the first bitstream, a decoding method based on a fixed probability density model may be used. No limitation is imposed on this decoding process.

2. For each of the stage sub-blocks corresponding to the current image block, a probability distribution parameter is determined based on the coefficient hyperparameter feature of the stage sub-block. For example, an inverse coefficient hyperparameter feature transform can be performed on the coefficient hyperparameter feature $z\_hat\_i$ corresponding to stage sub-block i to obtain a probability distribution parameter $p\_i$ for stage sub-block i. For example, the coefficient hyperparameter feature $z\_hat\_i$ is input to a probability hyperparameter decoding network, which performs the inverse coefficient hyperparameter feature transform on the coefficient hyperparameter feature $z\_hat\_i$ to obtain the probability distribution parameter $p\_i$. After obtaining the probability distribution parameter $p\_i$, a probability distribution model can be generated based on the probability distribution parameter $p\_i$.

3. For each of the stage sub-blocks corresponding to the current image block, decode a second bitstream (Bitstream #2) of the current image block based on the probability distribution parameter (probability distribution model) of the stage sub-block to obtain a residual feature of the stage sub-block.

For example, the probability distribution model corresponding to the probability distribution parameter $p\_i$ of the i-th (i=1...N) stage sub-block can be used to decode the second bitstream to obtain an image quantization feature, dequantize the image quantization feature, and perform feature restoration on the dequantized feature to obtain a residual feature r_hat_i. Or, the residual feature r_hat_i can be directly obtained after dequantizing the image quantization feature. Or, after decoding the second bitstream, feature restoration is performed on the decoded feature to obtain the residual feature r_hat_i, or the residual feature r_hat_i is directly obtained after decoding the second bitstream.

4. After obtaining the residual features for the N stage sub-blocks, for a residual feature r_hat_1 of a first stage sub-block, its coefficient hyperparameter feature z_hat_1 is input to a mean prediction network to obtain a mean feature (i.e., predicted value mu_1, mean mu_1) of the stage sub-block. Or, a pre-configured default reference feature is acquired and the coefficient hyperparameter feature z_hat_1 and the default reference feature of the stage sub-block are input into the mean prediction network to obtain the mean feature of the stage sub-block.

Then, a reconstructed feature y_hat_1 of the first stage sub-block is determined based on the residual feature r_hat_1 and the mean feature mu_1. For example, a sum of the residual feature r_hat_1 and the mean feature mu_1 can be taken as the reconstructed feature y_hat_1.

5. After obtaining the residual features for the N stage sub-blocks, for a residual feature r_hat_i of an i-th stage sub-block ($i>1$ and $i \leq N$), a coefficient hyperparameter feature z_hat_i of stage sub-block i and a reference feature of stage sub-block i are input to the mean prediction network to obtain a mean feature (i.e., predicted value mu_i, mean mu_i) for stage sub-block i.

Here, the reference feature of stage sub-block i (the i-th stage sub-block) can be acquired based on reconstructed features of preceding i-1 stage sub-blocks, i.e., based on reconstructed features y_hat_1 to y_hat_i-1. For example, the reference feature of stage sub-block i is obtained based on all reconstructed features from y_hat_1 to y_hat_i-1, i.e., the reference features include y_hat_1 to y_hat_i-1. Or, the reference feature of stage sub-block i is obtained based on partially reconstructed features from y_hat_1 to y_hat_i-1, i.e., the reference features include partially reconstructed features from y_hat_1 to y_hat_i-1. Or, the reference feature of stage sub-block i is obtained based on a reconstructed feature of an (i-1)-th stage sub-block, i.e., the reference feature of stage sub-block i is y_hat_i-1.

To control the cache size, the number of reconstructed features included in the reference feature cannot exceed a preset number. Assuming the preset number is M, then if the number of reconstructed features is less than or equal to M, the reference feature includes all reconstructed features from y_hat_1 to y_hat_i-1. If the number of reconstructed features is greater than M, the reference feature includes M reconstructed features from y_hat_1 to y_hat_i-1 (i.e., partially reconstructed features). To select M reconstructed features from y_hat_1 to y_hat_i-1, M reconstructed features can be selected based on a default strategy, such as selecting M reconstructed features closest to the current stage sub-block in decoding order, such as y_hat_i-1, y_hat_i-2, y_hat_i-3, and so on, until M reconstructed features are selected. Of course, other methods can also be used to select M reconstructed features, and there is no limitation to this. Or, index values of the M reconstructed features may be obtained by decoding the bitstream, and the M reconstructed features may be selected based on the index values obtained by decoding.

Then, a reconstructed feature y_hat_i of the i-th stage sub-block is determined based on the residual feature r_hat_i and the mean feature mu_i. For example, a sum of the residual feature r_hat_i and the mean feature mu_i can be taken as the reconstructed feature y_hat_i.

6. A clustering and partitioning unit obtains reconstructed features y_hat_i (i=1...N) for the N stage sub-blocks and performs feature aggregation on the reconstructed features y_hat_i for the N stage sub-blocks to obtain an aggregated feature. Then, the clustering and partitioning unit partitions the aggregated feature to obtain at least one partitioned feature y_hat_p, i.e., feature block y_hat_p.

7. For each partitioned feature y_hat_p, the clustering and partitioning unit inputs the partitioned feature y_hat_p into a synthesis transform network, and the synthesis transform network outputs a partitioned reconstructed image block x_hat_p corresponding to the partitioned feature y_hat_p.

8. A merging unit obtains partitioned reconstructed image blocks x_hat_p corresponding to multiple partitioned features y_hat_p and merges these partitioned reconstructed image blocks x_hat_p to obtain a reconstructed image block x_hat corresponding to the current image block. Obviously, if the original image x is divided into multiple current image blocks x_p, then reconstructed image blocks x_hat corresponding to all current image blocks x_p can form a reconstructed image. If the original image x corresponds to one current image block x_p, then the reconstructed image block x_hat is the reconstructed image.

In the above process, different bit rate control parameters can also be assigned to different stage sub-blocks of different image blocks based on regions of interest or bit rate information, so that different stage sub-blocks of different image blocks consume different bit rates.

For example, if special processing (e.g., non-uniform processing to ensure higher quality in the region of interest) is needed for a region of interest, the bit rate control parameter can be a quantization parameter (the bit rate control parameter needs to be transmitted to the decoding device via a bitstream). As shown in FIG. 7, the bit rate control parameter influences dequantization (IQ) processes for the first bitstream, and dequantization (IQ) processes for the second bitstream.

For example, when dequantizing the hyperparameter quantization feature corresponding to stage sub-block i, if the bit rate control parameter corresponding to stage sub-block i has been decoded from the bitstream, and the bit rate control parameter is used to ensure higher image quality corresponding to stage sub-block i, then the bit rate control parameter can be used to dequantize the hyperparameter quantization feature corresponding to stage sub-block i.

For another example, when dequantizing the image quantization feature corresponding to stage sub-block i, if the bit rate control parameter corresponding to stage sub-block i has been decoded from the bitstream, and the bit rate control parameter is used to ensure higher image quality corresponding to stage sub-block i, then the bit rate control parameter can be used to dequantize the image quantization feature corresponding to stage sub-block i.

For example, for precise bit rate control, the bit rate control parameter can be a control parameter for the synthesis transform network (the bit rate control parameter needs to be transmitted to the decoding device via a bitstream, the control parameter for the synthesis transform network means that the synthesis transform network can be determined based on the bit rate control parameter). As shown in FIG. 7, the bit rate control parameter influences the synthesis transform network. For example, when inputting the partitioned feature y_hat_p into the synthesis transform network, the partitioned feature y_hat_p and the bit rate control parameter are input to the synthesis transform network, and the synthesis transform network outputs the partitioned reconstructed image block x_hat_p corresponding to the partitioned feature y_hat_p.

Embodiment 7: In Embodiments 5 and 6, for the i-th stage sub-block (i=1...N), the reconstructed feature y_hat_i (i.e., the sum of the residual feature r_hat_i and the mean feature mu_i) is obtained. The reconstructed feature y_hat_i is used to determine a mean feature of a subsequent stage sub-block and/or the reconstructed feature y_hat_i is used to determine the reconstructed image block. Herein, "the reconstructed feature y_hat_i is used to determine a mean feature of a subsequent stage sub-block" means that the reconstructed feature y_hat_i serves as a reference feature for the subsequent stage sub-block, thereby determining the mean features of subsequent stage sub-blocks. "The reconstructed feature y_hat_i is used to determine the reconstructed image block" means that the reconstructed feature y_hat_i is input to the clustering and partitioning unit to determine the reconstructed image block corresponding to the current image block.

For the i-th (i=1...N) stage sub-block, after obtaining the reconstructed feature y_hat_i of the i-th stage sub-block, feature enhancement may be performed on the reconstructed feature y_hat_i to obtain an enhanced reconstructed feature y_hat_i'. The enhanced reconstructed feature y_hat_i' is used to determine a mean feature of a subsequent stage sub-block and/or the enhanced reconstructed feature y_hat_i' is used to determine the reconstructed image block. Herein, "the enhanced reconstructed feature y_hat_i' is used to determine a mean feature of a subsequent stage sub-block" means that the enhanced reconstructed feature y_hat_i serves as a reference feature for the subsequent stage sub-block, thereby determining the mean features of subsequent stage sub-blocks. "The enhanced reconstructed feature y_hat_i' is used to determine the reconstructed image block" means that the enhanced reconstructed feature y_hat_i' is input to the clustering and partitioning unit to determine the reconstructed image block corresponding to the current image block. For example, the bitstream can be decoded to obtain enhancement information, and the reconstructed feature y_hat_i can be enhanced based on the enhancement information to obtain a new reconstructed feature y_hat_i'. The new reconstructed feature y_hat_i' can be used for subsequent predictions from y_hat_i+1 to y_hat_N, and can also be used in subsequent clustering and partitioning processes.

In a possible implementation, an enhancement process for the reconstructed feature y_hat may be performed as follows.

Method 1: The inputs are pre-enhanced reconstructed features y_hat, Threshold[idx], GreaterFlag[idx], Scale1[idx] and Scale2[idx]. The output is an enhanced reconstructed feature y_hat_en. Threshold represents a threshold value; different idx may correspond to the same or different thresholds. idx denotes an index, such as 0, 1, 2, 3, etc. GreaterFlag represents a flag bit; different idx may correspond to the same or different flag bits. Scale1 represents a scaling factor; different idx may correspond to the same or different Scale1 values. Scale2 represents a scaling factor; different idx may correspond to the same or different Scale2 values.

Step 1: Determine a mask[c,i,j] for each set of filters (indexed by idx). For example, the following expression can be used to determine mask[c,i,j]. Of course, the following expression is just an example and is not limited to this.

$$\text{mask}[\text{idx}, c, i, j] = \begin{cases} 1 \text{ if } \sigma[c, i, j] > \text{Threshold}[\text{idx}] \text{ AND GreaterFlag}[\text{idx}] \text{ to True} \\ 1 \text{ if } \sigma[c, i, j] < \text{Threshold}[\text{idx}] \text{ AND GreaterFlag}[\text{idx}] \text{ to False} \\ 0 \text{ Otherwise} \end{cases}$$

$\sigma[c, i, j]$ represents a probability distribution parameter value at [c, i, j], where c denotes a channel, i denotes a horizontal coordinate, and j denotes a vertical coordinate. If the probability distribution parameter value is greater than Threshold[idx] and GreaterFlag[idx] is True, then mask[idx, c, i, j] is 1. If the probability distribution parameter value is less than Threshold[idx] and GreaterFlag[idx] is False, then mask[idx, c, i, j] is 1. Otherwise, mask[idx, c, i, j] is 0.

Step 2: Execute each set of filters (indexed by idx) in sequence. If mask[idx,c,i,j] is 1, then y_hat_en[c,i,j]=y_hat [c,i,j] +mean_hat[c,i,j]*Scale2[idx]+residual_hat [c,i,j]*Scalel [idx]; y_hat[c,i,j]= y_hat_en[c,i,j]. If there are multiple sets of filters, y_hat will be compensated multiple times. Here, mean_hat represents a mean feature (i.e., the aforementioned mu_i), and residual_hat represents a residual feature (i.e., the aforementioned r_hat).

Method 2: In method 1, scaling factors are the same for each channel c. In method 2, different channels c allow different scaling factors, that is, the scaling factors are Scale1[c,idx] and Scale2[c,idx]. Whether the current feature is scaled or not can be controlled by controlling a control switch, or the scaling factor of each channel can be changed to 0 to turn off the scaling. The difference between method 2 and method 1 lies in the enhancement method: y_hat_en[c,i,j]=y_hat [c,i,j]+mean_hat [c,i,j]*Scale2[c,idx]+residual_hat[c,i,j]*Scale1[c,idx].

Method 3: Compared with Method 1, the implementation of Method 3 is similar. The difference is that the enhancement method is as follows: y_hat_en[c,i,j]=y_hat[c,i,j]*Scalel[idx]+mean_hat [c,i,j]*Scale2[idx].

Method 4: Compared with Method 1, the implementation of Method 4 is similar. The difference is that the enhancement method is as follows: y_hat_en[c,i,j]=y_hat[c,i,j]*Scalel[idx]+residual_hat[c,i,j]*Scale2[idx]. In method 4, Scale1[idx] can also default to 1, and only a value of Scale2[idx] will affect the adjustment method.

Embodiment 8: In Embodiments 5 and 6, the coefficient hyperparameter feature z_hat_1 of the first stage sub-block can be input to a mean prediction network, which outputs the mean feature for the first stage sub-block. No limitation is imposed on the prediction process of this mean prediction network. For the i-th stage sub-block (i=1...N), the coefficient hyperparameter feature z_hat_i of the i-th stage sub-block and the reference feature of the i-th stage sub-block (which may be a default reference feature) can be input to the mean prediction network, which outputs the mean features for the i-th stage sub-block. The prediction process of the mean prediction network is described below.

Referring to FIG. 8A, which is a schematic structural diagram of a mean prediction network, the mean prediction network may include a first prediction network, a second prediction network, and a prediction fusion network. This is merely an example, and no limitation is imposed on the structure of the mean prediction network.

The coefficient hyperparameter feature z_hat_i of the i-th stage sub-block can be input to the first prediction network to obtain a first prediction feature corresponding to the coefficient hyperparameter feature z_hat_i. The reference feature of the i-th stage sub-block (e.g., the reconstructed features y_hat_1 to y_hat_i-1) can be input to the second prediction network to obtain a second prediction feature corresponding to the reference feature. Then, the first prediction feature and the second prediction feature are concatenated to obtain a concatenated feature, which is input into the prediction fusion network. The prediction fusion network processes the concatenated feature to obtain the mean feature mu_i of the i-th stage sub-block.

For the first prediction network: it performs feature enhancement operation and upsampling operation on the coefficient hyperparameter feature z_hat_i to obtain the first prediction feature. The feature enhancement operation may include but is not limited to: a convolution operation, or include a convolution operation and an activation operation. Of course, the above are only examples of feature enhancement operations and are not limited to this feature enhancement operation. The upsampling operation may include, but is not limited to, a deconvolution operation, a clipping operation and an activation operation, or include a deconvolution operation, a clipping operation, an activation operation and a convolution operation. Of course, the above is only an example of the upsampling operation, and there is no restriction on this upsampling operation. For example, the activation operation may be a ReLU operation.

For example, referring to FIG. 8B, which is a schematic structural diagram of a first prediction network, the first prediction network consists of three enhancement networks and two 2x (or named as 2-times) upsampling networks. Of course, the number of enhancement networks can be more or less, the number of 2x upsampling networks can be more or less, and the 2x upsampling networks may also be replaced with upsampling networks of other multiples.

The coefficient hyperparameter feature z_hat_i passes through the enhancement network 1 and the 2x upsampling network 1 to obtain an enhanced large-size feature 1. A spatial size (width and height) of the enhanced large-size feature 1 is twice that of the coefficient hyperparameter feature z_hat_i. After the enhanced large-size feature 1 passes through the enhancement network 2 and the 2x upsampling network 2, the enhanced large-size feature 2 is obtained. The spatial size (width and height) of the enhanced large-size feature 2 is twice that of the enhanced large-size feature 1. After the enhanced large-size feature 2 passes through the enhancement network 3, the first prediction feature is obtained.

For example, enhancement network 1 and enhancement network 2 may be the same or different, enhancement network 1 and enhancement network 3 may be the same or different, and enhancement network 2 and enhancement network 3 may be the same or different.

For example, an implementation of an enhancement network (such as enhancement network 1, and/or enhancement network 2, and/or enhancement network 3) can be shown in FIG. 8C, that is, the enhancement network is composed of a convolutional layer, which can be a 1x1 convolutional layer, a 3x3 convolutional layer, or a 5x5 convolutional layer, without limitation. For example, a 3x3 convolutional layer can be selected.

For another example, an implementation of an enhancement network (such as enhancement network 1, and/or enhancement network 2, and/or enhancement network 3) can be shown in FIG. 8D, that is, the enhancement network can be composed of convolutional layer 1, activation layer 1, convolutional layer 2, activation layer 2, and convolutional layer 3. The convolutional layer (such as convolutional layer 1, and/or convolutional layer 2, and/or convolutional layer 3) can be a 1x1 convolutional layer, a 3x3 convolutional layer, or a 5x5 convolutional layer, without limitation. For example, a 3x3 convolutional layer can be selected.

The activation layer (such as activation layer 1 and/or activation layer 2) can be a Relu layer, a leaky Relu layer, a sigmoid layer, a tanh (hyperbolic tangent) layer, or a Gelu (Gaussian Error Linear Units) layer. There is no restriction on the type of activation layer, for example, a relu layer can be selected.

Of course, the above are merely two examples of enhancement networks, and no limitation is imposed, as long as the enhancement function is achieved.

For example, the 2x upsampling network 1 and the 2x upsampling network 2 may be the same or different.

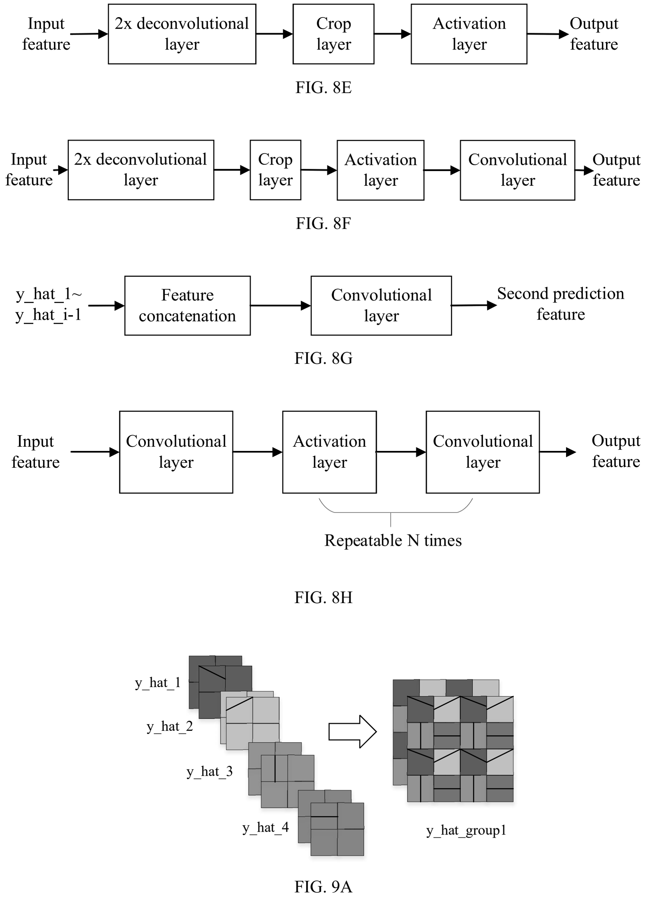

For example, an implementation of a 2x upsampling network (such as 2x upsampling network 1 and/or 2x upsampling network 2) can be shown in FIG. 8E , that is, the 2x upsampling network can be composed of a 2x deconvolutional layer, a Crop layer, and an activation layer. The deconvolutional layer can be a 2x2 deconvolutional layer, a 3x3 deconvolutional layer, a 4x4 deconvolutional layer, or a 5x5 deconvolutional layer, without limitation. For example, a 4x4 deconvolutional layer can be selected. The activation layer can be a relu layer, a leaky relu layer, a sigmoid layer, a tanh layer, or a Gelu layer. There is no restriction on the type of activation layer, for example, a relu layer can be selected. In addition, the Crop layer is used to crop features, so that the spatial resolution of the features becomes smaller while the number of channels remains unchanged.

For another example, an implementation of a 2x upsampling network (such as 2x upsampling network 1 and/or 2x upsampling network 2) can be seen in FIG. 8F, that is, the 2x upsampling network can be composed of a 2x deconvolutional layer, a Crop layer, an activation layer, and a convolutional layer. The deconvolutional layer can be a 2x2 deconvolutional layer, a 3x3 deconvolutional layer, a 4x4 deconvolutional layer, or a 5x5 deconvolutional layer. The activation layer can be a relu layer, a leaky relu layer, a sigmoid layer, a tanh layer, or a Gelu layer. The Crop layer is used to crop features, so that the spatial resolution of the features becomes smaller while the number of channels remains unchanged. The convolutional layer can be a 1x1 convolutional layer, a 3x3 convolutional layer, or a 5x5 convolutional layer, without limitation. For example, a 3x3 convolutional layer is selected.

Of course, the above are merely two examples of $2\times$ upsampling networks, and no limitation is imposed, as long as the upsampling function is achieved.

For example, the convolutional layer in the first prediction network may be a regular 2D convolution or a group convolution, such as a 2x group convolution. The implementation of group convolution can be found in subsequent embodiments and will not be described in detail here.

For the second prediction network: it performs feature concatenation on all reconstructed features in the reference feature along a channel dimension and performs convolution operation on the concatenated feature to obtain the second prediction feature. Or, it performs feature summation on all reconstructed features in the reference feature, and performs convolution operation on the summed feature to obtain the second prediction feature. The reference feature includes all of the reconstructed features of the preceding i-1 stage sub-blocks; or, a part of the reconstructed features of the preceding i-1 stage sub-blocks; or, a reconstructed feature of an (i-1)-th stage sub-block.

For example, referring to FIG. 8G, which is a schematic structural diagram of a second prediction network, the second prediction network may be composed of a feature concatenation layer and a convolutional layer. There is no limitation on the structure of the second prediction network. If the reference feature includes all of the reconstructed features of the preceding i-1 stage sub-blocks (e.g., y_hat_1 to y_hat_i-1), the feature concatenation layer may concatenate (concat) these reconstructed features along the channel dimension to obtain a concatenated feature. If the reference feature includes a part of the reconstructed features of the preceding i-1 stage sub-blocks (e.g., a part of y_hat_1 to y_hat_i-1), the feature concatenation layer may concatenate these reconstructed features along the channel dimension to obtain a concatenated feature. Or, if the reference feature includes a reconstructed feature of an (i-1)-th stage sub-block, the feature concatenation layer may directly take the reconstructed feature of the (i-1)-th stage sub-block as a concatenated feature.

The feature concatenation layer may input the concatenated feature into the convolutional layer, which then performs convolution operation on the concatenated feature to obtain the second prediction feature. The convolutional layer can be a 1x1 convolutional layer, a 3x3 convolutional layer, or a 5x5 convolutional layer, without limitation. For example, a 3x3 convolutional layer is selected. The convolutional layer in the second prediction network may be a regular 2D convolution or a group convolution, such as a 2x group convolution. The implementation of group convolution can be found in subsequent embodiments.

For another example, the second prediction network may be composed of a feature summation layer and a convolutional layer. If the reference feature includes all of the reconstructed features of the preceding i-1 stage sub-blocks, the feature summation layer sums these reconstructed features to obtain the summed feature. If the reference feature includes a part of the reconstructed features of the preceding i-1 stage sub-blocks, the feature summation layer sums these reconstructed features to obtain the summed feature. Or, if the reference feature includes a reconstructed feature of an (i-1)-th stage sub-block, the feature summation layer may directly take the reconstructed feature of the (i-1)-th stage sub-block as the summed feature. The feature summation layer inputs the summed feature to the convolutional layer, which performs convolution operation on the summed feature to obtain the second prediction feature.

To control the cache size, the number of reconstructed features included in the reference feature cannot exceed a preset number. Assuming the preset number is M, then if the number of reconstructed features is less than or equal to M, the reference feature includes all reconstructed features from y_hat_1 to y_hat_i-1. Or, if the number of reconstructed features is greater than M, the reference feature includes M reconstructed features from y_hat_1 to y_hat_i-1. For example, M reconstructed features may be selected based on a default strategy, such as M reconstructed features closest to the current stage sub-block in decoding order may be selected. Or, index values of the M reconstructed features may be obtained by decoding the bitstream, and the M reconstructed features may be selected based on the index values obtained by decoding.

For the prediction fusion network: it performs convolution operation and at least one fusion operation on the concatenated feature (i.e., the concatenated feature of the first prediction feature and the second prediction feature) to obtain the mean feature mu_i of the i-th stage sub-block. For each fusion operation, the fusion operation may include an activation operation and a convolution operation. For example, the activation operation may be a ReLU operation.

For example, referring to FIG. 8H, which is a schematic structural diagram of a prediction fusion network, the prediction fusion network may be composed of a convolutional layer and N fusion layers, where N is a positive integer, such as 1 or 2. Each fusion layer may be composed of an activation layer and a convolutional layer. There is no restriction on the structure of the prediction fusion network. Obviously, after an input feature (i.e., the concatenated feature) pass through the convolutional layer and N "activation layers + convolutional layers", an output feature can be obtained, i.e., the mean features mu_i of the i-th stage sub-block.

The convolutional layer can be a 1x1 convolutional layer, a 3x3 convolutional layer, or a 5x5 convolutional layer, without limitation. For example, a 1x1 convolutional layer is selected. The convolutional layer in the prediction fusion network may be a regular 2D convolution or a group convolution, such as a 2x group convolution. The implementation of group convolution can be found in subsequent embodiments. The activation layer can be a relu layer, a leaky relu layer, a sigmoid layer, a tanh layer, or a Gelu layer, for example, a relu layer can be selected.

Embodiment 9: For the coding device and the decoding device, the reconstructed image block corresponding to the current image block needs to be determined based on respective reconstructed features of the stage sub-blocks. For example, in Embodiments 5 and 6, a clustering and partitioning unit may perform feature aggregation on the reconstructed features of the N stage sub-blocks (y_hat_1 to y_hat_N) to obtain an aggregated feature (which may also be named as a full-size aggregated feature y_hat_all). The aggregated feature y_hat_all is then partitioned to obtain at least one partitioned feature y_hat_p, such as partitioned features y_hat_p_1 to y_hat_p_K. For each partitioned feature y_hat_p, the clustering and partitioning unit inputs the partitioned feature y_hat_p into a synthesis transform network, which outputs a partitioned reconstructed image block x_hat_p corresponding to the partitioned feature y_hat_p. A merging unit obtains respective partitioned reconstructed image blocks x_hat_p corresponding to multiple partitioned features y_hat_p and merges these partitioned reconstructed image blocks x_hat_p to obtain a reconstructed image block x_hat corresponding to the current image block.

First, the clustering and partitioning unit performs feature aggregation on the respective reconstructed features of the N stage sub-blocks to obtain an aggregated feature.

For example, referring to FIG. 9A, the reconstructed features of the N stage sub-blocks (y_hat_1 to y_hat_N) may be aggregated according to phase to obtain an aggregated feature y_hat_all. FIG. 9A uses N=4 as an example for illustration. For example, an example of aggregation by phase can be shown as follows. After obtaining y_hat_group1, y_hat_group1 can be taken as the aggregated feature y_hat_all.

$$\mathrm{y\_hat\_group1}(c,w,h) = \begin{cases} \mathrm{y\_hat\_1}(c,w/2,h/2), \text{if } w\%2 \text{ equals } 0, \text{ and } h\%2 \text{ equals } 0 \\ \mathrm{y\_hat\_2}(c,w/2,h/2), \text{if } w\%2 \text{ equals } 1, \text{ and } h\%2 \text{ equals } 0 \\ \mathrm{y\_hat\_3}(c,w/2,h/2), \text{if } w\%2 \text{ equals } 0, \text{ and } h\%2 \text{ equals } 1 \\ \mathrm{y\_hat\_4}(c,w/2,h/2), \text{if } w\%2 \text{ equals } 1, \text{ and } h\%2 \text{ equals } 1 \end{cases}$$

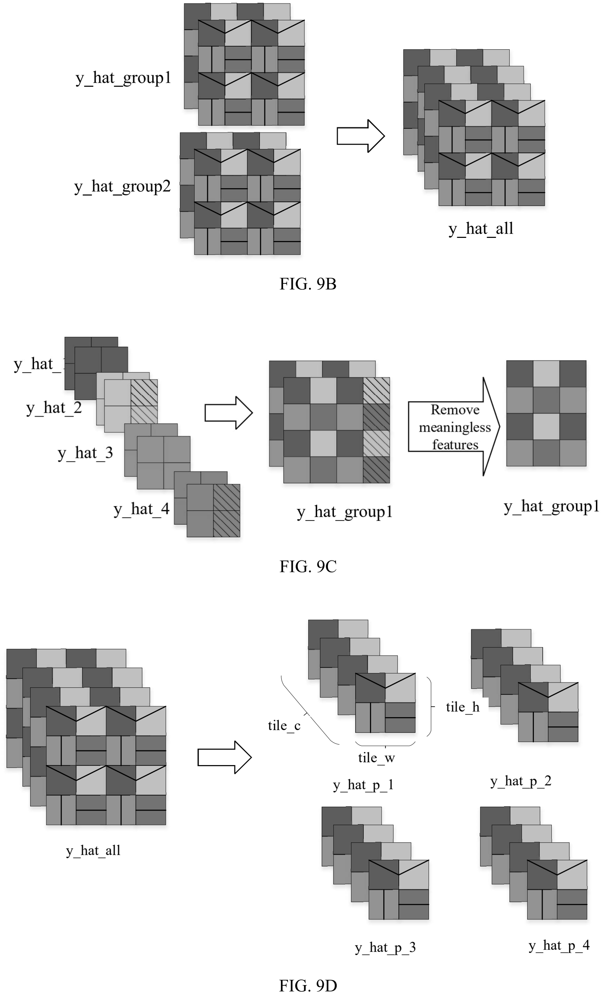

For example, referring to FIG. 9B, the reconstructed features of the N stage sub-blocks (y_hat_1 to y_hat_N) can be aggregated according to phase to obtain multiple phase-aggregated features. These multiple phase-aggregated features are then concatenated along the channel dimension to obtain the aggregated feature y_hat_all. For example, see the above expression for an example of phase-based aggregation, phase aggregation yields *y_hat_group1 and y_hat_group2.* If there are many reconstructed features, after obtaining *y_hat_group1* and *y_hat_group2,* the multiple aggregated y_hat_group features can be further concatenated along the channel dimension to form the aggregated feature y_hat_all.

For example, before aggregating the reconstructed features of N stage sub-blocks, useless feature values can be removed. For example, if the height or width of the full-size feature is an odd number, reconstructed features of some stage sub-blocks need to be padded to ensure that the reconstructed features of each of the stage sub-blocks have the same size when divided into four at the coding device. The padding solution can be to add a column to the right or a row to the bottom of the full-size feature. Based on this, after aggregating the reconstructed features of the N stage sub-blocks, useless features need to be removed. Referring to FIG. 9C, an example where the width is an odd number is shown. If the height is an odd number, the bottommost row is removed. Of course, the above is a case of dividing into four. If there is a case of dividing into 16, the features removed may be more than one row or one column.

Second, the clustering and partitioning unit partitions the aggregated feature y_hat_all to obtain K partitioned features y_hat_p.

For example, the aggregated features y_hat_all may also be partitioned to reduce subsequent memory overhead (the synthesis transform operation requires multiple upsampling of the features, which can cause the feature data size to exceed the allowable memory capacity). Of course, this feature partitioning process is not mandatory. If the current feature size is small, or if it is determined based on bitstream information that the current feature does not need to be partitioned, the following partitioning process is skipped, and y_hat_p equals y_hat_all, meaning there is only one partitioned feature.

To partition the aggregated feature y_hat_all, a non-overlapping feature partitioning method (feature partitioning method without overlapping parts) may be used. Refer to FIG. 9D for an example of partitioning the aggregated feature y_hat_all into four partitioned features y_hat_p.

In the non-overlapping partitioning method, a target size of the partitioned features can be determined. Based on this target size, the aggregated feature y_hat_all is partitioned into multiple partitioned features evenly in an order from top to bottom and left to right, and a size of each partitioned feature is the target size, resulting in partitioned features y_hat_p_1, y_hat_p_2, y_hat_p_3, y_hat_p_4.

For example, the target size is the size of each partitioned feature. The target size may be read from the bitstream or determined based on a size of a current to-be-partitioned feature. There is no restriction on this. If the number of channels of each partitioned feature is tile_c, the width is tile_w, and the height is tile_h, then the aggregated feature y_hat_all is evenly partitioned into multiple partitioned features of tile_c*tile_w*tile_h in the order from top to bottom and left to right, resulting in partitioned features y_hat_p_1, y_hat_p_2, y_hat_p_3, y_hat_p_4.

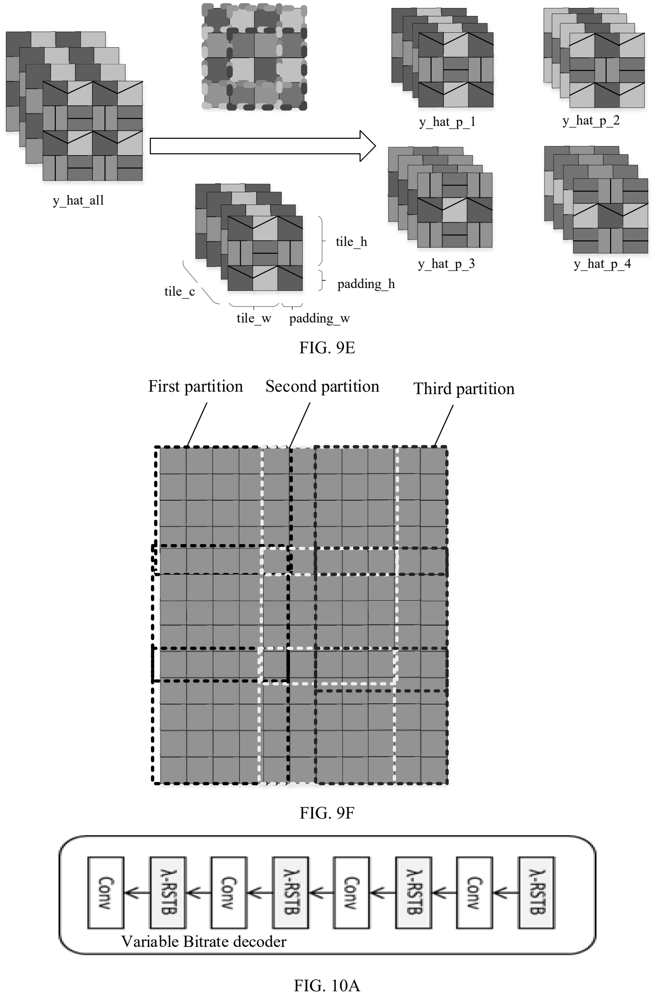

To partition the aggregated feature y_hat_all, an overlapping feature partitioning method (feature partitioning method with overlapping parts) may be used. Refer to FIG. 9E for an example of partitioning the aggregated feature y_hat_all into four partitioned features y_hat_p.

In the overlapping feature partitioning method, an actual partition size and an overlap size of the partitioned features can be determined. The actual partition size can be a partition size of the partitioned features excluding an overlapping portion, and the overlap size can be a size of an overlapping portion between adjacent partitioned features. Based on the actual partition size, the aggregated feature is partitioned into multiple partitioned features based on the actual partition size and the overlap size, and a size of each partitioned feature is the target size, resulting in partitioned features y_hat_p_1, y_hat_p_2, y_hat_p_3, and y_hat_p_4.

For example, the actual partition size and the overlap size are determined. The actual partition size is the partition size excluding the overlapping portion, and the overlap size is the size of the overlapping portion between adjacent partition features. These size information can be read from the bitstream or determined based on the size of the current to-be-partitioned feature. There is no restriction on this. Referring to FIG. 9E, if the actual partition size is tile_c * tile_w * tile_h and the overlap size is tile_c * padding_w * padding_h, then when the top, bottom, left, and right overlap, the size of each partitioned feature (i.e., the target size) is tile_c * (tile_w+ 2*padding_w) * (tile_h+ 2*padding _h). Based on this, for the aggregated feature y_hat_all, features from column 1 to (tile_w+ 2*padding_w) and row 1 to (tile_h+ 2*padding _h) are assigned to the first partitioned feature. Features from column (tile_w+padding_w+1) to (2*tile_w+ 3*padding_w) and row (tile_h+ padding _h+1) to (2*tile_h+ 3*padding_h) are assigned to the second partitioned feature, and so on.

Referring to FIG. 9E, a 4x4x4 aggregated feature y_hat_all can be partitioned into four 4x3x3 partitioned features. In these partitioned features, tile_c is 4, padding_w and padding_h are 1, and tile_w and tile_h are 1.

For example, for the partitions in the last row or column, if the quantity is insufficient, the overlap region can be increased to ensure the final partition size meets the requirements. Referring to FIG. 9F, an example is given, where y_hat_all has a size of 11x13, padding_w and padding_h are 1, and tile_w and tile_h are 3. The first and second partitions in the first row have a size of 5x5, while for the third partition, to ensure it also has a size of 5x5, the overlap region is extended leftward by 2 columns.

Third, the clustering and partitioning unit inputs each partitioned feature y_hat_p (e.g., K partitioned features y_hat_p) into the synthesis transform network, which outputs a partitioned reconstructed image block x_hat_p corresponding to each partitioned feature y_hat_p.

For each partitioned feature y_hat_p, after inputting the partitioned feature y_hat_p into the synthesis transform network, the synthesis transform network performs synthesis transform on the partitioned feature y_hat_p to obtain the partitioned reconstructed image block x_hat_p. There is no restriction on this.

Fourth, the merging unit merges the multiple partitioned reconstructed image blocks x_hat_p to obtain the reconstructed image block x_hat.

For example, the merging unit may obtain K partitioned reconstructed image blocks x_hat_p corresponding to K partitioned features y_hat_p and merges the K partitioned reconstructed image blocks x_hat_p to obtain the reconstructed image block x_hat.

For example, if the aggregated feature y_hat_all were partitioned using a non-overlapping feature partitioning method, then the merging unit uses a non-overlapping feature merging method to merge the K partitioned reconstructed image blocks x_hat_p. For example, the partitioned reconstructed image blocks x_hat_p corresponding to the K partitioned features are sorted in an order from top to bottom and left to right, and then sequentially concatenate the sorted partitioned reconstructed image blocks x_hat_p corresponding to the K partitioned features to obtain the reconstructed image block x_hat corresponding to the current image block. The concatenation process can be considered an inverse process of FIG. 9D, which will not be described in detail here.

For example, if the aggregated feature y_hat_all were partitioned using an overlapping feature partitioning method, then the merging unit uses an overlapping feature merging method to merge the K partitioned reconstructed image blocks x_hat_p. For example, the merging unit can determine the actual block size and overlap size of each block reconstructed image block x_hat_p. The merging unit can sort the partitioned reconstructed image blocks x_hat_p corresponding to the K partitioned features y_hat_p in an order from top to bottom and left to right. Based on the actual partition size and the overlap size, it sequentially concatenates the sorted partitioned reconstructed image blocks x_hat_p corresponding to the K partitioned features y_hat_p to obtain the reconstructed image block x_hat corresponding to the current image block. The reconstructed image block may include K partitioned reconstructed image blocks, a non-overlapping portion of a partitioned reconstructed image block has a size equal to the actual partition size of the partitioned reconstructed image block, and an overlapping portion between the partitioned reconstructed image block and an adjacent partitioned reconstructed image block has a size equal to the overlap size of the partitioned reconstructed image block. The concatenation process can be considered an inverse process of FIG. 9E, which will not be described in detail here.

For example, the actual partition size and the overlap size are determined. The actual partition size is the partition size excluding the overlapping portion, and the overlap size is the size of the overlapping portion between adjacent partition features. These size information can be read from the bitstream or determined based on the size of the current to-be-partitioned feature. There is no restriction on this. Assuming the actual partition size is $x\_c * xtile\_w * xtile\_h$, an overlap width in the overlap size is xpadding_w, and an overlap height is xpadding_h, then the multiple partitioned reconstructed image blocks x_hat_p are concatenated sequentially according to a receiving order of the partitioned reconstructed image blocks x_hat_p.

For the overlapping portion between a left partitioned reconstructed image block and a right partitioned reconstructed image block, a value of the overlapping portion is a value of the left partitioned reconstructed image block, and a value of the right partitioned reconstructed image block is discarded. That is, a value of the earliest (left) partitioned reconstructed image block is used; for subsequent sub-block overlapping portions, the overlapping values are directly discarded. Or, the value of the overlapping portion is a mean value (average) of the two partitioned reconstructed image blocks.

For the overlapping portion between an upper partitioned reconstructed image block and a lower partitioned reconstructed image block, a value of the overlapping portion is a value of the upper partitioned reconstructed image block, and a value of the lower partitioned reconstructed image block is discarded. That is, a value of the earliest (upper) partitioned reconstructed image block is used; for subsequent sub-block overlapping portions, the overlapping values are directly discarded. Or, the value of the overlapping portion is a mean value (average) of the two partitioned reconstructed image blocks.

Embodiment 10: For the coding device and the decoding device, the reconstructed image block corresponding to the current image block needs to be determined based on respective reconstructed features of the stage sub-blocks. For example, a clustering and partitioning unit may perform feature aggregation on the reconstructed features of the N stage sub-blocks (y_hat_1 to y_hat_N) to obtain an aggregated feature (which may also be named as a full-size aggregated feature y_hat_all). The clustering and partitioning unit then inputs the aggregated feature y_hat_all into a synthesis transform network, which outputs a reconstructed image block corresponding to the aggregated feature y_hat_all. This reconstructed image block is the reconstructed image block x_hat corresponding to the current image block. Compared with Embodiment 9, this process does not involve partitioning the aggregated feature y_hat_all or merging multiple partitioned reconstructed image blocks x_hat_p.

First, the clustering and partitioning unit performs feature aggregation on the respective reconstructed features of the N stage sub-blocks to obtain an aggregated feature.

For example, the reconstructed features of the N stage sub-blocks (y_hat_1 to y_hat_N) may be aggregated according to phase to obtain the aggregated feature y_hat_all. Or, the reconstructed features of the N stage sub-blocks (y_hat_1 to y_hat_N) may be aggregated according to phase to obtain multiple phase-aggregated features. These multiple phase-aggregated features are then concatenated along the channel dimension to obtain the aggregated feature y_hat_all. The feature aggregation process can be referred to in Embodiment 9, and will not be repeated here.

Second, the clustering and partitioning unit inputs the aggregated feature y_hat_all into the synthesis transform network. The synthesis transform network performs synthesis transform on the aggregated feature y_hat_all (no restriction is imposed on the synthesis transform method) and outputs the reconstructed image block corresponding to the aggregated feature y_hat_all, i.e., the reconstructed image block x_hat corresponding to the current image block.

Embodiment 11: For the coding device and the decoding device, the reconstructed image block corresponding to the current image block needs to be determined based on respective reconstructed features of the stage sub-blocks. For example, after obtaining the reconstructed features of the N stage sub-blocks (y_hat_1 to y_hat_N), the clustering and partitioning unit does not perform feature aggregation on the reconstructed features nor partitions the aggregated feature. Instead, it directly inputs the reconstructed features of each of the stage sub-blocks into the synthesis transform network, which outputs a partitioned reconstructed image block x_hat_p corresponding to each of the stage sub-blocks. A merging unit obtains the partitioned reconstructed image blocks x_hat_p corresponding to the multiple stage sub-blocks and merges the partitioned reconstructed image blocks x_hat_p to obtain the reconstructed image block x_hat corresponding to the current image block.

First, after obtaining the reconstructed features of the N stage sub-blocks, the clustering and partitioning unit inputs each of the respective reconstructed features of the stage sub-blocks into the synthesis transform network. The synthesis transform network performs synthesis transform on the reconstructed features (no restriction is imposed on the synthesis transform method) and outputs a partitioned reconstructed image block x_hat_p corresponding to each of the stage sub-blocks.

Second, the merging unit merges the multiple partitioned reconstructed image blocks x_hat_p to obtain the reconstructed image block x_hat.

For example, the merging unit may obtain N partitioned reconstructed image blocks x_hat_p corresponding to the N stage sub-blocks and merges the N partitioned reconstructed image blocks x_hat_p to obtain the reconstructed image block x_hat.

For example, the merging unit uses a non-overlapping feature merging method to merge N partitioned reconstructed image blocks x_hat_p. For example, the N partitioned reconstructed image blocks x_hat_p are sorted in an order from top to bottom and left to right, and then sequentially concatenate the sorted N partitioned reconstructed image blocks x_hat_p to obtain the reconstructed image block x_hat corresponding to the current image block. Or, the merging unit uses an overlapping feature merging method to merge N partitioned reconstructed image blocks x_hat_p. For example, the actual partition size and overlap size of each partitioned reconstructed image block x_hat_p are determined; the N partitioned reconstructed image blocks x_hat_p are sorted in an order from top to bottom and left to right; and based on the actual partition size and overlap size, the sorted N partitioned reconstructed image blocks x_hat_p are sequentially concatenated to obtain the reconstructed image block x_hat corresponding to the current image block. The reconstructed image block includes N partitioned reconstructed image blocks, where a non-overlapping portion of a partitioned reconstructed image block has a size equal to the actual partition size of the partitioned reconstructed image block, and an overlapping portion between the partitioned reconstructed image block and an adjacent partitioned reconstructed image block has a size equal to the overlap size of the partitioned reconstructed image block. For an overlapping portion between a left partitioned reconstructed image block and a right partitioned reconstructed image block, a value of the overlapping portion is a value of the left partitioned reconstructed image block, and a value of the right partitioned reconstructed image block is discarded. Or, a value of the overlapping portion is a mean value of the two partitioned reconstructed image blocks. For an overlapping portion between an upper partitioned reconstructed image block and a lower partitioned reconstructed image block, a value of the overlapping portion is a value of the upper partitioned reconstructed image block, and a value of the lower partitioned reconstructed image block is discarded. Or, a value of the overlapping portion is a mean value of the two partitioned reconstructed image blocks.

Embodiment 12: In Embodiments 1-11, a synthesis transform network is involved. To achieve precise bit rate control, the coding device may transmit a bit rate control parameter for the synthesis transform network to the decoding device. For example, the coding device may code the bit rate control parameter in an auxiliary bitstream corresponding to the current image block. The decoding device may decode the auxiliary bitstream corresponding to the current image block to obtain the bit rate control parameter and determine the synthesis transform network based on bit rate control parameter, i.e., determine the synthesis transform network based on bitstream information, particularly bit rate-related information. The synthesis transform network may consist of at least one $2\times$ deconvolutional layer (e.g., a $2\times2$, $3\times3$, $4\times4$, or $5\times5$ $2\times$ deconvolutional layer; for instance, a $4\times4$ $2\times$ deconvolutional layer may be selected, though deconvolutional layers with other multiples are also possible), at least one activation layer (e.g., relu layer, leaky relu layer, sigmoid layer, tanh layer or Gelu layer; for instance, relu layer may be selected), and at least one convolutional layer (e.g., $1\times1$, $3\times3$, or $5\times5$ convolutional layer; for instance, a $3\times3$ convolutional layer may be selected; a convolutional layer in the synthesis transform network may be a regular 2D convolution or group convolution, such as a $2\times$ group convolution). An output feature spatial resolution of the synthesis transform network is a positive integer multiple of an input feature spatial resolution, such as $16\times$ (both height and width are 16 times), etc., and the number of output feature channels is 1 or 3.

Based on the synthesis transform network, the synthesis transform network can be controlled based on the bit rate control parameter, that is, the bit rate control parameter serves as the input of the synthesis transform network.

In a possible implementation, for Embodiment 9, the clustering and partitioning unit inputs K partitioned features y_hat_p into the synthesis transform network. Therefore, the coding device codes K bit rate control parameters corresponding to the K partitioned features y_hat_p, respectively, in an auxiliary bitstream corresponding to the current image block. The source of these K bit rate control parameters is not restricted. When the coding device uses these K bit rate control parameters to control the analysis transform network and the synthesis transform network (i.e., the K bit rate control parameters serve as inputs to the analysis transform network and the synthesis transform network; for example, a partitioned feature y_hat_p and its corresponding bit rate control parameter are input together into the synthesis transform network as input features), a bitrate corresponding to the bitstream of the current image block matches or approximates a target bitrate (i.e., a difference between the bit rate control parameter and the target bitrate is less than a threshold). The decoding device may decode the auxiliary bitstream corresponding to the current image block to obtain the K bit rate control parameters corresponding to the K partitioned features y_hat_p.

Based on this, the clustering and partitioning unit can obtain the K partitioned features y_hat_p and the K bit rate control parameters corresponding to the K partitioned features y_hat_p. For each partitioned feature y_hat_p, the partitioned feature y_hat_p and the bit rate control parameter corresponding to the partitioned feature y_hat_p are input into the synthesis transform network. The synthesis transform network generates a partitioned reconstructed image block x_hat_p corresponding to the partitioned feature y_hat_p based on the partitioned feature y_hat_p and the bit rate control parameter corresponding to the partitioned feature y_hat_p.

For example, the process where the synthesis transform network generates a partitioned reconstructed image block x_hat_p corresponding to the partitioned feature y_hat_p based on the partitioned feature y_hat_p and the bit rate control parameter corresponding to the partitioned feature y_hat_p may include, but is not limited to: obtaining a first feature by processing the partitioned feature y_hat_p through the synthesis transform network; obtaining a second feature by processing the bit rate control parameter corresponding to the partitioned feature y_hat_p through the synthesis transform network; generating a third feature based on the first feature and the second feature; and determining the partitioned reconstructed image block x_hat_p corresponding to the partitioned feature y_hat_p based on the third feature.

In a possible implementation, for Embodiment 10, the clustering and partitioning unit inputs the aggregated feature y_hat_all into the synthesis transform network. Therefore, the coding device codes one bit rate control parameter corresponding to the aggregated feature y_hat_all (i.e., the bit rate control parameter corresponding to the current image block) in an auxiliary bitstream corresponding to the current image block. The source of this bit rate control parameter is not restricted. When the coding device uses this bit rate control parameter to control the analysis transform network and the synthesis transform network (i.e., the bit rate control parameter serves as an input to the analysis transform network and the synthesis transform network; for example, the aggregated feature y_hat_all and this bit rate control parameter are input together into the synthesis transform network, and the current image block and this bit rate control parameter are input together into the analysis transform network, as input features), a bitrate corresponding to the bitstream of the current image block matches or approximates a target bitrate. The decoding device may decode the auxiliary bitstream corresponding to the current image block to obtain the bit rate control parameter corresponding to the current image block.

Based on this, the clustering and partitioning unit obtains the aggregated feature y_hat_all and the bit rate control parameter, and inputs the aggregated feature y_hat_all and the bit rate control parameter into the synthesis transform network. The synthesis transform network generates a reconstructed image block x_hat corresponding to the aggregated feature y_hat_all based on the aggregated feature y_hat_all and the bit rate control parameter.

The process where the synthesis transform network generates a reconstructed image block x_hat corresponding to the aggregated feature y_hat_all based on the aggregated feature y_hat_all and the bit rate control parameter may include: obtaining a first feature by processing the aggregated feature y_hat_all through the synthesis transform network; obtaining a second feature by processing the bit rate control parameter through the synthesis transform network; generating a third feature based on the first feature and the second feature; and determining the reconstructed image block x_hat corresponding to the aggregated feature y_hat_all based on the third feature.

In a possible implementation, for Embodiment 11, the clustering and partitioning unit inputs the reconstructed features of the N stage sub-blocks into the synthesis transform network. Therefore, the coding device codes N bit rate control parameters corresponding to the N stage sub-blocks, respectively, in an auxiliary bitstream corresponding to the current image block. The source of these N bit rate control parameters is not restricted. When the coding device uses these N bit rate control parameters to control the analysis transform network and the synthesis transform network (i.e., the N bit rate control parameters serve as inputs to the analysis transform network and the synthesis transform network; for example, a reconstructed feature of a stage sub-block and its corresponding bit rate control parameter are input together into the synthesis transform network), a bitrate corresponding to the bitstream of the current image block matches or approximates a target bitrate. The decoding device decodes the auxiliary bitstream corresponding to the current image block to obtain the N bit rate control parameters corresponding to the N stage sub-blocks.

Based on this, the clustering and partitioning unit obtains the reconstructed features of the N stage sub-blocks and the N bit rate control parameters corresponding to the N stage sub-blocks. For each of the stage sub-blocks, its reconstructed feature and its corresponding bit rate control parameter are input together into the synthesis transform network. The synthesis transform network generates a partitioned reconstructed image block x_hat_p corresponding to the stage sub-block based on the reconstructed feature of the stage sub-block and the bit rate control parameter corresponding to the stage sub-block.

For example, the process where the synthesis transform network generates a partitioned reconstructed image block x_hat_p corresponding to the stage sub-block based on the reconstructed feature of the stage sub-block and the bit rate control parameter corresponding to the stage sub-block may include, but is not limited to: obtaining a first feature by processing the reconstructed feature of the stage sub-block through the synthesis transform network; obtaining a second feature by processing the bit rate control parameter corresponding to the stage sub-block through the synthesis transform network; generating a third feature based on the first feature and the second feature; and determining the partitioned reconstructed image block x_hat_p corresponding to the stage sub-block based on the third feature.

Embodiment 13: Based on Embodiment 12, the synthesis transform network can be named as a synthesis transform network controlled by a bit rate control parameter. This bit rate control parameter can be denoted as a $\lambda$ parameter, which is decoded from the auxiliary bitstream corresponding to the current image block. Referring to FIG. 10A, which is a schematic structural diagram of a $\lambda$-parameter-controlled synthesis transform network, this synthesis transform network is a synthesis transform network with a variable bit rate. Based on this synthesis transform network, an output feature with a channel number of 1 or 3 can be obtained. Of course, FIG. 10A is merely an example of the synthesis transform network, and the structure of the synthesis transform network is not limited.

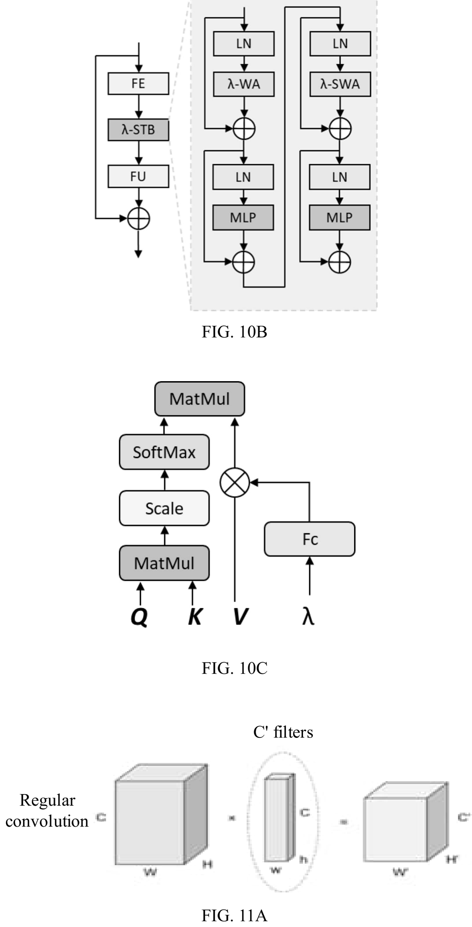

As shown in FIG. 10A, the $\lambda$-parameter-controlled synthesis transform network may include at least one Conv (Convolutional layer) and at least one $\lambda$-RSTB (Residual Swin Transformer Block). FIG. 10A uses 4 convolutional layers and 4 $\lambda$-RSTBs as an example; the number of convolutional layers can be greater or fewer, and the number of $\lambda$-RSTBs can also be greater or fewer. The convolutional layer can be a 1x1, 3x3, or 5x5 convolutional layer. For example, a 3x3 convolutional layer can be selected. The convolutional layer in the synthesis transform network can be a regular 2D convolution or a group convolution, such as a 2x group convolution. There is no restriction on the structure of this convolutional layer. $\lambda$-RSTB represents an RSTB network layer controlled by the $\lambda$ parameter. A structure of a $\lambda$-parameter-controlled RSTB network layer is shown in FIG. 10B.

Referring to FIG. 10B, the $\lambda$-RSTB may include, but is not limited to, network layers such as FE (Feature Embedding), $\lambda$-STB (Swin Transformer Block), FU (Feature Un-embedding), etc. This is merely an example, and no limitation is imposed on the structure of the $\lambda$-RSTB. FE is a feature embedding layer, used to perform feature embedding processing. FU is a feature un-embedding layer, used to perform feature un-embedding processing.

$\lambda$-STB represents an STB network layer controlled by the $\lambda$ parameter. A structure of a $\lambda$-parameter-controlled STB network layer is shown in FIG. 10B. The $\lambda$-STB may include, but is not limited to, LN (linear), $\lambda$-WA (Weight Averaging), $\lambda$-SWA (Stochastic Weight Averaging), MLP (Multilayer Perceptron), etc. This is merely an example, and no limitation is imposed on the structure of the $\lambda$-STB. LN is a linear layer; the $\lambda$-STB may include at least one LN, and the number of LNs is not limited. Here, four LNs are taken as an example. MLP is a multilayer perceptron. A $\lambda$-STB may include at least one MLP, and the number of MLPs is not limited. Here, two MLPs are taken as an example.

The structure of $\lambda$-SWA is the same as that of $\lambda$-WA. Here, $\lambda$-WA is used as an example. $\lambda$-WA represents a WA network layer controlled by the $\lambda$ parameter. The structure of the $\lambda$-parameter-controlled WA network layer can be referred to in FIG. 10C. The $\lambda$-WA may include, but is not limited to, an FC (Full Connection) layer, MatMul (Matrix Multiplication), Scale, SoftMax (Logical Regression, also known as normalization), MatMul, etc. This is merely an example, and no limitation is imposed on the structure of the $\lambda$-WA.

The parameter $\lambda$ can be mapped to a scaling coefficient through the FC layer. That is, the bit rate control parameter is processed through the FC layer of the synthesis transform network to obtain the second feature, which can be a scaling coefficient.

The input features (such as the partitioned feature y_hat_p, the aggregated feature y_hat_all, or a reconstructed feature of a stage sub-block) can be processed by a transformer network to obtain Q feature, K feature, and V feature. The Q feature, K feature, and V feature all originate from the input feature itself; they are feature vectors generated by multiplying the input feature with corresponding weights. There is no restriction on this process. In other words, the synthesis transform network can include a transformer network. The input feature (such as the partitioned feature, aggregated feature, or reconstructed features) is processed by the transformer network within the synthesis transform network to obtain the first feature.

After obtaining the Q feature, K feature, and V feature, matrix multiplication, scaling, and logistic regression operations can be performed on the Q feature and K feature in sequence to obtain an intermediate feature 1. The scaling coefficient (obtained by mapping the parameter $\lambda$ through the FC layer) can be multiplied by the V feature to obtain an intermediate feature 2. Then, matrix multiplication is performed between the intermediate feature 1 and the intermediate feature 2 to obtain an output feature of the $\lambda$-WA. To summarize, the scaling coefficient is the second feature, and the Q, K, and V features are the first feature. Therefore, a third feature can be generated based on the first feature and the second feature. The third feature is the output feature of λ-WA.

After obtaining the output feature of the λ-WA, and referring to FIG. 10A and FIG. 10B, an output feature of the synthesis transform network (such as the partitioned reconstructed image block x_hat_p corresponding to the partitioned feature y_hat_p, the reconstructed image block x_hat corresponding to the aggregated feature y_hat_all, or the partitioned reconstructed image block x_hat_p corresponding to the stage sub-block) can be determined based on the output feature of the λ-WA (i.e., the third feature).

Referring to the λ-WA shown in FIG. 10C, the computational method of λ-WA can be as follows. Through this method, the λ parameter can be used to control the output of the image codec, thereby achieving bitstreams of different sizes and reconstructed images of different qualities.

$$\mathrm{Attention}\left(\vec{Q}, \vec{K}, \vec{V}, \lambda\right) = \mathrm{softmax}\left(\frac{\overrightarrow{QK^T}}{\sqrt{d_k}}\right)\vec{V} \cdot \mathrm{Fc}(\lambda)$$

Embodiment 14: In Embodiment 1 to Embodiment 13, a convolutional layer may be involved. The convolutional layer may be a regular 2D convolution or a group convolution, such as a 2x group convolution. For example, the steps of a regular 2D convolution can be seen in FIG. 11A. The input feature is (H×W×C). Then, C' filters are applied (each filter has a size of (h×w×C), and the filter size C is the same as the input feature C). The input layer is converted to an output feature of size (H'×W'×C').

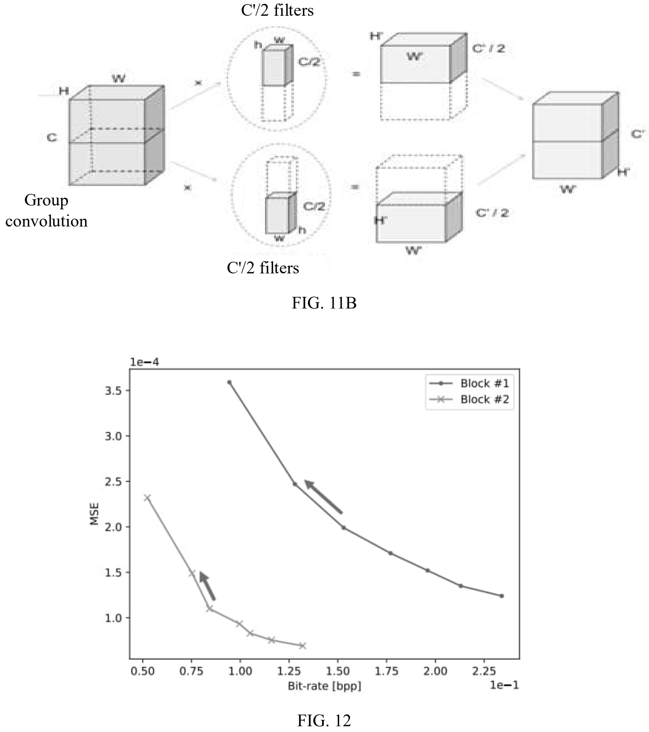

The steps of a group convolution can be referred to in FIG. 11B. For each filters group, it may contain C'/g filters (e.g., g=2), and the number of channels of each filter is half that of a regular 2D convolution filter. Each filters group operates on 1/g of the number of channels corresponding to the original W×H×C, that is, W×H×C/g. Thus, each filters group outputs features corresponding to C'/g channels. Finally, the channels can be stacked to obtain the final C' channels, thus achieving the same effect as the regular 2D convolution mentioned above. Obviously, group convolution can effectively reduce the number of parameters and the amount of calculation.

Embodiment 15: In Embodiments 1-14, to achieve precise bit rate control, the coding device needs to send the bit rate control parameter to the decoding device. For example, the bit rate control parameter is carried and sent via the auxiliary bitstream corresponding to the current image block. At the coding device, the bit rate control parameter influences both the analysis transform network and the synthesis transform network. To make the bitrate corresponding to the bitstream of the current image block matches or approximates the target bit rate (a pre-configured bit rate), the coding device can try different bit rate control parameters to find a target bit rate control parameter. Under the target rate control parameter, the bitrate corresponding to the bitstream of the current image block matches or approximates the target bit rate, and the coding device codes the target bit rate control parameter in the auxiliary bitstream corresponding to the current image block.

If the current image block corresponds to only one bit rate control parameter (e.g., the aggregated feature y_hat_all corresponds to one bit rate control parameter), each bit rate control parameter from multiple bit rate control parameters can be tried sequentially until the bitrate corresponding to the bitstream of the current image block matches or approximates the target bit rate, thereby obtaining the target bit rate control parameter.

If the current image block corresponds to multiple bit rate control parameters (e.g., K bit rate control parameters corresponding to K partitioned features, or N bit rate control parameters corresponding to N stage sub-blocks), initial values are first set for multiple bit rate control parameters. If the bit rate corresponding to the bitstream of the current image block does not meet the requirements, then select a candidate bit rate control parameter from the multiple bit rate control parameters, and reduce a value of the candidate bit rate control parameter. If the bit rate corresponding to the bitstream of the current image block does not meet the requirements, then continue to select a candidate rate control parameter from the multiple bit rate control parameters (the same as or different from the previous candidate bit rate control parameter), reduce a value of the candidate bit rate control parameter, and so on, until the bit rate corresponding to the bitstream of the current image block meets the requirements (that is, the bit rate corresponding to the bitstream of the current image block is the target bit rate or close to the target bit rate), and then obtain target values of the multiple bit rate control parameters.

When selecting a candidate bit rate control parameter from the multiple bit rate control parameters, a bit rate control parameter may be randomly selected as the candidate bit rate control parameter, the largest bit rate control parameter may be selected as the candidate bit rate control parameter, or the candidate bit rate control parameter may be selected based on the relationship between bitrate and distortion. For example, when bit rate control parameter A is reduced from the current level to the next level, the distortion is A1, and when bit rate control parameter B is reduced from the current level to the next level, the distortion is B1. If distortion A1 is less than distortion B1, that is, distortion A1 is the minimum distortion, then bit rate control parameter A is selected as the candidate bit rate control parameter.

In a possible implementation, an implementation of how the coding device to set a $\lambda_i$ parameter for each (feature or image) block is as follows: For each block $x_i'$ (e.g., a partitioned feature or a stage sub-block), code it using different

$\lambda_i$ values. Before coding, several discrete $\lambda$ values are taken for each block, and these discrete $\lambda$ values are defined as quality levels. The bit rate and distortion of each block and each quality level are then calculated before coding. For each frame (image), this process only needs to be done once before the first coding.

During the coding process, a quality level $\lambda$ is selected for each block for coding. During the coding process, all blocks are first coded using the same quality level, which is the minimum quality level that can make the total bit rate greater than the target bit rate, that is, satisfying the following formula: Rt is the target bit rate, and $\Sigma_i R_{B_i}(q)$ represents the sum of the bit rates of all blocks at quality level q.

$$\sum_i R_{B_i}(q-1) < R_t \le \sum_i R_{B_i}(q)$$

Then, the quality level of each block is gradually reduced until the total bitrate is less than the target bitrate. For each block, the gradient of the current quality level and the previous quality level on the rate-distortion curve can be calculated, that is, the gradient is calculated using the following formula:

$$C_{B_i}(q) = -\frac{D_{B_i}(q) - D_{B_i}(q-1)}{R_{B_i}(q) - R_{B_i}(q-1)}$$

Here, $D_{B_i}(q)$ is the reconstruction loss of block i at quality level q. When using a monotonically decreasing loss function (e.g., Mean Squared Error) with respect to bit rate as the metric, select the block i with the smallest $C_{B_i}$ (i.e., the candidate bit rate control parameter corresponding to the minimum distortion) and reduce its quality level by one. Repeat this process until the total bit rate is less than the target bit rate.

Referring to FIG. 12, which is a schematic diagram of $\lambda$ parameter decision, seven quality levels (i.e., seven different $\lambda$ values) are designed on the rate-distortion curve. At quality level 3, it can be calculated that $C_{B_1}(3) < C_{B_2}(3)$. This means that at quality level 3, reducing the quality level of block 2 would cause a greater coding performance loss; therefore, the quality level of block 1 is reduced instead.

As can be seen from the technical solutions in the above embodiments, in this embodiment, for neural network-based coding and decoding technologies, a rate-variable and adjustable coding and decoding solution is proposed. This solution improves parallelism, effectively saves feature storage cache, achieves higher rate control accuracy, incurs less coding performance loss, and provides better coding performance and rate control accuracy. By using block-based coding and decoding, peak memory usage is reduced, the decoding time for a single block is minimized, and high-speed parallel decoding capability is achieved. This ensures the quality of reconstructed image blocks while maintaining low complexity for the neural network, improves coding and decoding performance, and reduces complexity. For example, the bit rate control algorithm in this solution can achieve a bit rate control accuracy of around 99%, while the coding performance loss is only around 1% compared to no rate control. Taking decoding a 2k resolution image with a block size of 256x256 as an example, using block-based coding and decoding reduces the peak memory usage to 1/10 of full-image decoding, while the decoding time per block is less than 0.1 seconds, enabling high-speed parallel decoding. With only a minimal increase in the number of parameters, it achieves better coding and decoding performance.

Embodiment 16: A decoding method is proposed in an embodiment of the present disclosure. The method may be applied to a decoding device (also named as a video decoder) and may include: obtaining, by decoding a first bitstream of a current image block, a coefficient hyperparameter feature of the current image block; determining a probability distribution parameter based on the coefficient hyperparameter feature, obtaining, by decoding a second bitstream of the current image block based on the probability distribution parameter, a residual feature of the current image block, and determining a reconstructed feature of the current image block based on the residual feature; and obtaining, by decoding an auxiliary bitstream corresponding to the current image block, a bit rate control parameter of the current image block, and obtaining, by inputting the reconstructed feature and the bit rate control parameter into a synthesis transform network a reconstructed image block corresponding to the current image block.

For example, obtaining, by inputting the reconstructed feature and the bit rate control parameter into the synthesis transform network, the reconstructed image block corresponding to the current image block may include, but is not limited to: obtaining a first feature by processing the reconstructed feature through the synthesis transform network; obtaining a second feature by processing the bit rate control parameter through the synthesis transform network; generating a third feature based on the first feature and the second feature; and determining the reconstructed image block corresponding to the current image block based on the third feature.

For example, based on Embodiments 3 and 4, the synthesis transform network can be adjusted. In Embodiment 16, only the adjustment process of the synthesis transform network is described; for other processes, refer to Embodiments 3 and 4.

For example, precise bit rate control can be achieved using the bit rate control parameter, which influences the analysis transform network and the synthesis transform network. For example, when the coding device performs analysis transform on the current image block through the analysis transform network, it inputs the bit rate control parameter and the current image block into the analysis transform network, and the analysis transform network outputs the image feature corresponding to the current image block. When the coding device or decoding device inputs the image feature y_hat into the synthesis transform network, it inputs the image feature y_hat and the bit rate control parameter into the synthesis transform network, and the synthesis transform network outputs the reconstructed image block corresponding to the current image block.

Based on a pre-configured target bit rate, the coding device can attempt to apply different bit rate control parameters. After applying a specific bit rate control parameter, if a bit rate corresponding to a bitstream for the current image block matches or approximates the target bit rate, then the bit rate control parameter is ultimately adopted. The coding device may then transmit the bit rate control parameter to the decoding device.

For example, the coding device may transmit a bit rate control parameter for the synthesis transform network to the decoding device. For example, the coding device may code the bit rate control parameter corresponding to the current image block in an auxiliary bitstream corresponding to the current image block. The decoding device may decode the auxiliary bitstream corresponding to the current image block to obtain the bit rate control parameter corresponding to the current image block and determine the synthesis transform network based on the bit rate control parameter. The synthesis transform network may consist of at least one 2× deconvolutional layer (e.g., a 2×2, 3×3, 4×4, or 5×5 2× deconvolutional layer; for instance, a 4×4 2× deconvolutional layer may be selected, though deconvolutional layers with other multiples are also possible), at least one activation layer (e.g., relu layer, leaky relu layer, sigmoid layer, tanh layer or Gelu layer; for instance, relu layer may be selected), and at least one convolutional layer (e.g., 1×1, 3×3, or 5×5 convolutional layer; for instance, a 3×3 convolutional layer may be selected; a convolutional layer in the synthesis transform network may be a regular 2D convolution or group convolution, such as a 2× group convolution). An output feature spatial resolution of the synthesis transform network is a positive integer multiple of an input feature spatial resolution, such as 16× (both height and width are 16 times), etc., and the number of output feature channels is 1 or 3. Based on the synthesis transform network, the synthesis transform network can be controlled based on the bit rate control parameter, that is, the bit rate control parameter serves as the input of the synthesis transform network.

For example, the coding device codes the bit rate control parameter corresponding to the current image block in the auxiliary bitstream of the current image block. The source of this bit rate control parameter is not restricted. When the coding device uses this bit rate control parameter to control the analysis transform network and the synthesis transform network (i.e., the bit rate control parameter serves as an input to the analysis transform network and the synthesis transform network), a bitrate corresponding to the bitstream of the current image block matches or approximates a target bitrate. The decoding device may decode the auxiliary bitstream corresponding to the current image block to obtain the bit rate control parameter corresponding to the current image block. Based on this, the decoding device can input the image feature y_hat and the bit rate control parameter into the synthesis transform network. The synthesis transform network generates a reconstructed image block corresponding to the current image block based on the image feature y_hat and the bit rate control parameter, and outputs the reconstructed image block.

The process where the synthesis transform network generates a reconstructed image block corresponding to the current image block based on the image feature y_hat and the bit rate control parameter may include: obtaining a first feature by processing the image features y_hat (i.e., the reconstructed features y_hat) through the synthesis transform network; obtaining a second feature by processing the bit rate control parameter through the synthesis transform network; generating a third feature based on the first feature and the second feature; and determining the reconstructed image block corresponding to the current image block based on the third feature.

For example, referring to FIG. 10A, FIG. 10B, and FIG. 10C, the synthesis transform network may include at least one Conv (Convolutional layer) and at least one $\lambda$-RSTB. The $\lambda$-RSTB may include, but is not limited to, network layers such as FE, $\lambda$-STB, FU, etc. The $\lambda$-STB may include, but is not limited to, LN, $\lambda$-WA, $\lambda$-SWA, MLP, etc. The structure of $\lambda$-SWA is the same as that of $\lambda$-WA. The $\lambda$-WA may include, but is not limited to, an FC layer, MatMul, Scale, SoftMax, MatMul, etc. On this basis, the parameter $\lambda$ (i.e., the bit rate control parameter) can be mapped to a scaling coefficient through the FC layer, i.e., the bit rate control parameter is processed by the FC layer of the synthesis transform network to obtain the second feature. The image feature y_hat can be processed by a transformer network to obtain Q feature, K feature, and V feature, i.e., the image feature y_hat is processed by the transformer network within the synthesis transform network to obtain the first feature. After obtaining the Q feature, K feature, and V feature, matrix multiplication, scaling, and logistic regression operations can be performed on the Q feature and K feature in sequence to obtain an intermediate feature 1. The scaling coefficient can be multiplied by the V feature to obtain an intermediate feature 2. Then, matrix multiplication is performed between the intermediate feature 1 and the intermediate feature 2 to obtain an output feature of the $\lambda$-WA, the third feature is generated based on the first feature and the second feature, and the third feature is an output feature of $\lambda$-WA. After obtaining the output feature of the $\lambda$-WA, and referring to FIG. 10A and FIG. 10B, an output feature of the synthesis transform network can be determined based on the output feature of the $\lambda$-WA (i.e., the third feature). For example, the output feature can be the reconstructed image block corresponding to the current image block.

For example, each of the above embodiments may be realized individually or in combination, e.g., each of the embodiments 1 to 16 can be realized separately, and at least two of the embodiments 1 to 16 can be realized in combination.

For example, in the above embodiments, the content of the coding device can also be applied to the decoding device, that is, the decoding device can process it in the same way, and the content of the decoding device can also be applied to the coding device, that is, the coding device can process it in the same way.

For example, in the various embodiments described above, content from different embodiments can be mutually referenced. For example, content from Embodiment 3 can be applied to Embodiment 16, content from Embodiment 4 can be applied to Embodiment 16, content from Embodiments 5 to 15 can be applied to Embodiment 16, and content among Embodiments 5 to 15 can be mutually referenced. No limitation is imposed in this regard.

Based on the same application concept as the method described above, a decoding apparatus is further proposed in an embodiment of the present disclosure, which is applied to a decoding device, and the apparatus includes: a memory, configured to store video data; a decoder, configured to realize the decoding methods in Embodiments 1 to 16, i.e., a processing flow at the decoding device.

For example, in a possible implementation, a decoder configured to implement:

obtain, by decoding a first bitstream of a current image block, a coefficient hyperparameter feature of each of stage sub-blocks in the current image block;

for each of the stage sub-blocks, determine a probability distribution parameter based on the coefficient hyperparameter feature of the stage sub-block, and obtain, by decoding a second bitstream of the current image block based on the probability distribution parameter, a residual feature of the stage sub-block;

determine a reconstructed feature of the stage sub-block based on the residual feature of the stage sub-block and a mean feature of the stage sub-block; and

determine a reconstructed image block corresponding to the current image block based on respective reconstructed features of the stage sub-blocks.

Based on the same application concept as the method described above, a coding apparatus is further proposed in an embodiment of the present disclosure, which is applied to a coding device, and the coding device includes: a memory, configured to store video data; a coder configured to realize the coding methods in Embodiments 1 to 16, i.e., a processing flow at the coding device.

For example, in a possible implementation, a coder configured to implement:

obtain, by inputting a current image block into an analysis transform network, a feature block corresponding to the current image block;

splitting the feature block into to-be-coded features of a plurality of stage sub-blocks;

for each of the stage sub-blocks corresponding to the current image block, obtain a coefficient hyperparameter feature of the stage sub-block, and code the coefficient hyperparameter feature of the stage sub-block into a first bitstream of the current image block;

determine a residual feature of the stage sub-block based on the to-be-coded feature of the stage sub-block and a mean feature of the stage sub-block; and

determine a probability distribution parameter based on the coefficient hyperparameter feature of the stage sub-block, and coding the residual feature of the stage sub-block into a second bitstream of the current image block based on the probability distribution parameter.

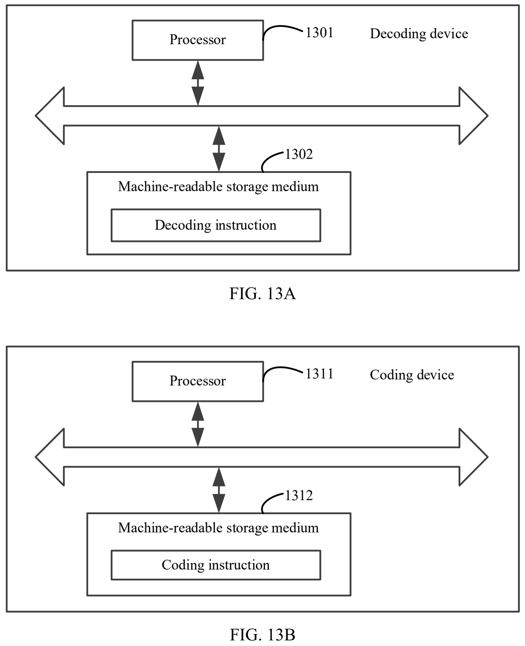

Based on the same application concept as the method described above, from a hardware level, a schematic diagram of a hardware architecture of a decoding device (which can also be named as a video decoder) provided by the embodiment of the present disclosure can be specifically shown in FIG. 13A. The decoding device includes: a processor 1301 and a machine-readable storage medium 1302, where the machine-readable storage medium 1302 stores machine-executable instructions that can be executed by the processor 1301; the processor 1301 is configured to execute machine-executable instructions to realize the decoding methods in Embodiments 1 to 16 described above. For example, in a possible embodiment, the processor 1301, when executing the machine-executable instructions, performs the following steps:

obtaining, by decoding a first bitstream of a current image block, a coefficient hyperparameter feature of each of stage sub-blocks in the current image block;

for each of the stage sub-blocks, determining a probability distribution parameter based on the coefficient hyperparameter feature of the stage sub-block, and obtaining, by decoding a second bitstream of the current image block based on the probability distribution parameter, a residual feature of the stage sub-block;

determining a reconstructed feature of the stage sub-block based on the residual feature of the stage sub-block and a mean feature of the stage sub-block; and

determining a reconstructed image block corresponding to the current image block based on respective reconstructed features of the stage sub-blocks.

Based on the same application concept as the method described above, from a hardware level, a schematic diagram of a hardware architecture of a coding device (which can also be named as a video coder) provided by the embodiment of the present disclosure can be specifically shown in FIG. 13B. The coding device includes: a processor 1311 and a machine-readable storage medium 1312, where the machine-readable storage medium 1312 stores machine-executable instructions that can be executed by the processor 1311; the processor 1311 is configured to execute machine-executable instructions to realize the coding methods in Embodiments 1 to 16 described above. For example, in a possible embodiment, the processor 1311, when executing the machine-executable instructions, performs the following steps:

obtaining, by inputting a current image block into an analysis transform network, a feature block corresponding to the current image block;

splitting the feature block into to-be-coded features of a plurality of stage sub-blocks;

for each of the stage sub-blocks corresponding to the current image block, obtaining a coefficient hyperparameter feature of the stage sub-block, and coding the coefficient hyperparameter feature of the stage sub-block into a first bitstream of the current image block;

determining a residual feature of the stage sub-block based on the to-be-coded feature of the stage sub-block and a mean feature of the stage sub-block; and

determining a probability distribution parameter based on the coefficient hyperparameter feature of the stage sub-block, and coding the residual feature of the stage sub-block into a second bitstream of the current image block based on the probability distribution parameter.

Based on the same application concept as the method described above, an embodiment of the present disclosure provides an electronic device. The electronic device includes: at least one processor and a machine-readable storage medium, where the machine-readable storage medium stores machine-executable instructions that can be executed by the at least one processor; the at least one processor is configured to execute machine-executable instructions to realize the decoding method coding methods in Embodiments 1 to 16 described above.

Based on the same application concept as the method described above, an embodiment of the present disclosure provides a machine-readable storage medium storing several computer instructions, where the computer instructions are executed by at least one processor to perform the methods disclosed in the above embodiments of the present disclosure, for example, the coding method or decoding method in the above embodiments.

Based on the same application concept as the method described above, an embodiment of the present disclosure further provides a computer application program, which, when executed by at least one processor, can realize the decoding method or the coding method disclosed in the above embodiments of the present disclosure.

Based on the same application concept as the method described above, an embodiment of the present disclosure further provides a decoding apparatus, which can be applied to a decoding device, and the decoding apparatus includes: a decoding module, configured to obtain, by decoding a first bitstream of a current image block, a coefficient hyperparameter feature of each of stage sub-blocks in the current image block; for each of the stage sub-blocks, determine a probability distribution parameter based on the coefficient hyperparameter feature of the stage sub-block, and obtain, by decoding a second bitstream of the current image block based on the probability distribution parameter, a residual feature of the stage sub-block; and a determination module, configured to determine a reconstructed feature of the stage sub-block based on the residual feature of the stage sub-block and a mean feature of the stage sub-block; and determine a reconstructed image block corresponding to the current image block based on respective reconstructed features of the stage sub-blocks.

For example, the determination module is further configured to: for a first stage sub-block, obtain the mean feature of the stage sub-block through a mean prediction network and based on the coefficient hyperparameter feature of the stage sub-block, or, obtain a pre-configured default reference feature, and obtain the mean feature of the stage sub-block through a mean prediction network and based on the coefficient hyperparameter feature of the stage sub-block and the default reference feature; or, for an i-th stage sub-block, where i is greater than 1, obtain a reference feature of the i-th stage sub-block based on reconstructed features of preceding i-1 stage sub-blocks; and obtaining the mean feature of the stage sub-block through a mean prediction network and based on the coefficient hyperparameter feature of the stage sub-block and the reference feature; where the reference feature includes all of the reconstructed features of the preceding i-1 stage sub-blocks; or, a part of the reconstructed features of the preceding i-1 stage sub-blocks; or, a reconstructed feature of an (i-1)-th stage sub-block.

For example, the mean prediction network includes a first prediction network, a second prediction network and a prediction fusion network; and the determination module, when obtaining the mean feature of the stage sub-block through the mean prediction network and based on the coefficient hyperparameter feature of the stage sub-block and the reference feature, is configured to: obtain a first prediction feature corresponding to the coefficient hyperparameter feature through the first prediction network; obtain a second prediction feature corresponding to the reference feature through the second prediction network; and obtain a concatenated feature by performing feature concatenation on the first prediction feature and the second prediction feature, input the concatenated feature into the prediction fusion network, and obtain the mean feature of the stage sub-block by processing the concatenated feature through the prediction fusion network.

For example, the determination module, when obtaining a first prediction feature corresponding to the coefficient hyperparameter feature through the first prediction network, is specifically configured to: obtain the first prediction feature by performing feature enhancement operation and upsampling operation on the coefficient hyperparameter feature through the first prediction network. the feature enhancement operation includes: a convolution operation, or includes a convolution operation and an activation operation; the upsampling operation includes: a deconvolution operation, a cropping operation, and an activation operation, or includes a deconvolution operation, a cropping operation, an activation operation, and a convolution operation. For example, the determination module, when obtaining a second prediction feature corresponding to the reference feature through the second prediction network is specifically configured to: perform feature concatenation on all reconstructed features in the reference feature along a channel dimension, and obtain the second prediction feature by performing convolution operation on the concatenated feature; or, perform feature summation on all reconstructed features in the reference feature, and obtain the second prediction feature by performing convolution operation on the summed feature. The determination module, when obtaining the mean feature of the stage sub-block by processing the concatenated feature through the prediction fusion network is specifically configured to: obtain the mean feature of the stage sub-block by performing convolution operation and at least one fusion operation on the concatenated feature through the prediction fusion network, where the fusion operation includes an activation operation and a convolution operation.

For example, the determination module is further configured to: obtain an enhanced reconstructed feature by performing feature enhancement on the reconstructed feature of the stage sub-block, where the enhanced reconstructed feature is used to determine a mean feature of a stage sub-block, and the enhanced reconstructed feature is used to determine the reconstructed image block.

For example, the determination module, when determining the reconstructed image block corresponding to the current image block based on respective reconstructed features of the stage sub-blocks, is specifically configured to: obtain an aggregated feature by performing feature aggregation on the respective reconstructed features of the stage sub-blocks; and obtain the reconstructed image block corresponding to the current image block by inputting the aggregated feature into a synthesis transform network; or, obtain an aggregated feature by performing feature aggregation on the respective reconstructed features of the stage sub-blocks; obtain partitioned features by partitioning the aggregated feature; obtain respective partitioned reconstructed image blocks corresponding to the partitioned features by inputting each of the partitioned features into a synthesis transform network; and obtain the reconstructed image block corresponding to the current image block by merging the respective partitioned reconstructed image blocks corresponding to the partitioned features; or, obtain respective partitioned reconstructed image blocks corresponding to the stage sub-blocks by inputting each of the reconstructed features of the stage sub-blocks into a synthesis transform network; and obtain the reconstructed image block corresponding to the current image block by merging the respective partitioned reconstructed image blocks corresponding to the stage sub-blocks.

For example, the determination module, when obtaining the aggregated feature by performing feature aggregation on the respective reconstructed features of the stage sub-blocks, is specifically configured to: obtain the aggregated feature by aggregating the respective reconstructed features of the stage sub-blocks according to phase; or, obtain a plurality of phase-aggregated features by aggregating the respective reconstructed features of the stage sub-blocks according to phase, and obtain the aggregated feature by concatenating the plurality of phase-aggregated features along a channel dimension.

For example, the determination module, when obtaining the partitioned features by partitioning the aggregated feature, is specifically configured to: determine a target size of the partitioned features; and partition the aggregated feature into the partitioned features evenly in an order from top to bottom and left to right based on the target size, where a size of each of the partitioned features is the target size; or, determine an actual partition size and an overlap size of the partitioned features, where the actual partition size is a partition size of the partitioned features excluding an overlapping portion, and the overlap size is a size of an overlapping portion between adjacent partitioned features; and partition the aggregated feature into the partitioned features based on the actual partition size and the overlap size, where a size of each of the partitioned features is the target size.

For example, the determination module, when obtaining the reconstructed image block corresponding to the current image block by merging the respective partitioned reconstructed image blocks corresponding to the partitioned features, is specifically configured to: obtain the reconstructed image block corresponding to the current image block by sorting the respective partitioned reconstructed image blocks corresponding to the partitioned features in an order from top to bottom and left to right and sequentially concatenating the sorted partitioned reconstructed image blocks; or, determine an actual partition size and an overlap size of each of the respective partitioned reconstructed image blocks; sort the respective partitioned reconstructed image blocks corresponding to the partitioned features in an order from top to bottom and left to right; obtain the reconstructed image block corresponding to the current image block by sequentially concatenating the sorted partitioned reconstructed image blocks based on the actual partition size and the overlap size; where a non-overlapping portion of a partitioned reconstructed image block has a size equal to the actual partition size of the partitioned reconstructed image block, and an overlapping portion between the partitioned reconstructed image block and an adjacent partitioned reconstructed image block has a size equal to the overlap size of the partitioned reconstructed image block; for an overlapping portion between a left partitioned reconstructed image block and a right partitioned reconstructed image block, a value of the overlapping portion is a value of the left partitioned reconstructed image block, or, a value of the overlapping portion is a mean value of the left partitioned reconstructed image block and the right partitioned reconstructed image block; and for an overlapping portion between an upper partitioned reconstructed image block and a lower partitioned reconstructed image block, a value of the overlapping portion is a value of the upper partitioned reconstructed image block, or, a value of the overlapping portion is a mean value of the upper partitioned reconstructed image block and the lower partitioned reconstructed image block.

For example, the determination module, when obtaining the reconstructed image block corresponding to the current image block by inputting the aggregated feature into the synthesis transform network, is specifically configured to: obtain a bit rate control parameter of the current image block by decoding an auxiliary bitstream corresponding to the current image block, and obtain the reconstructed image block corresponding to the current image block by inputting the bit rate control parameter and the aggregated feature into the synthesis transform network; or the determination module, when obtaining respective partitioned reconstructed image blocks corresponding to the partitioned features by inputting each of the partitioned features into the synthesis transform network, is specifically configured to: obtain a bit rate control parameter of each of the partitioned features by decoding an auxiliary bitstream corresponding to the current image block, and for each of the partitioned features, obtain a partitioned reconstructed image block corresponding to the partitioned feature by inputting the partitioned feature and the bit rate control parameter of the partitioned feature into the synthesis transform network; or, the determination module, when obtaining respective partitioned reconstructed image blocks corresponding to the stage sub-blocks by inputting each of the respective reconstructed features of the stage sub-blocks into the synthesis transform network, is specifically configured to: obtain a bit rate control parameter of each of the stage sub-blocks by decoding an auxiliary bitstream corresponding to the current image block, and for each of the stage sub-blocks, obtain a partitioned reconstructed image block corresponding to the stage sub-block by inputting the reconstructed feature of the stage sub-block and the bit rate control parameter of the stage sub-block into the synthesis transform network.

For example, the determination module, when obtaining the reconstructed image block corresponding to the current image block by inputting the bit rate control parameter and the aggregated feature into the synthesis transform network, is specifically configured to: obtain a first feature by processing the aggregated feature through the synthesis transform network; obtain a second feature by processing the bit rate control parameter through the synthesis transform network; generate a third feature based on the first feature and the second feature; and determine the reconstructed image block corresponding to the current image block based on the third feature; or, the determination module, when obtaining the partitioned reconstructed image block by inputting the partitioned feature and the bit rate control parameter of the partitioned feature into the synthesis transform network, is specifically configured to: obtain a first feature by processing the partitioned feature through the synthesis transform network; obtain a second feature by processing the bit rate control parameter of the partitioned feature through the synthesis transform network; generate a third feature based on the first feature and the second feature; and determine the partitioned reconstructed image block corresponding to the partitioned feature based on the third feature; or, the determination module, when obtaining the partitioned reconstructed image block corresponding to the stage sub-block by inputting the reconstructed feature of the stage sub-block and the bit rate control parameter of the stage sub-block into the synthesis transform network, is specifically configured to: obtain a first feature by processing the reconstructed feature of the stage sub-block through the synthesis transform network; obtain a second feature by processing the bit rate control parameter of the stage sub-block through the synthesis transform network; generate a third feature based on the first feature and the second feature; and determine the partitioned reconstructed image block corresponding to the stage sub-block based on the third feature.

Based on the same application concept as the method described above, an embodiment of the present disclosure further provides a coding apparatus, which can be applied to a coding device, and the coding apparatus includes: an acquisition module, configured to obtain, by inputting a current image block into an analysis transform network, a feature block corresponding to the current image block; and split the feature block into to-be-coded features of a plurality of stage sub-blocks; a coding module, configured to, for each of the stage sub-blocks corresponding to the current image block, obtain a coefficient hyperparameter feature of the stage sub-block, and code the coefficient hyperparameter feature of the stage sub-block into a first bitstream of the current image block; a determination module, configured to determine a residual feature of the stage sub-block based on the to-be-coded feature of the stage sub-block and a mean feature of the stage sub-block; and the coding module is further configured to determine a probability distribution parameter based on the coefficient hyperparameter feature of the stage sub-block, and code the residual feature of the stage sub-block into a second bitstream of the current image block based on the probability distribution parameter.

For example, the determination module is further configured to: for a first stage sub-block, obtain the mean feature of the stage sub-block through a mean prediction network and based on the coefficient hyperparameter feature of the stage sub-block, or, obtain a pre-configured default reference feature, and obtaining the mean feature of the stage sub-block through a mean prediction network and based on the coefficient hyperparameter feature of the stage sub-block and the default reference feature; or, for an i-th stage sub-block, where i is greater than 1, obtaining a reference feature of the i-th stage sub-block based on reconstructed features of preceding i-1 stage sub-blocks; and obtaining the mean feature of the stage sub-block through a mean prediction network and based on the coefficient hyperparameter feature of the stage sub-block and the reference feature; where the reference feature includes all of the reconstructed features of the preceding i-1 stage sub-blocks; or, a part of the reconstructed features of the preceding i-1 stage sub-blocks; or, a reconstructed feature of an (i-1)-th stage sub-block.

It should be understood by those skilled in the art that embodiments of the present disclosure can be provided as a method, a system, or a computer program product. The present disclosure can take the form of an entirely hardware embodiment, an entirely software embodiment, or an embodiment combining software and hardware aspects. Embodiments of the present disclosure can take the form of a computer program product implemented on one or more computer-usable storage media (including but not limited to disk storage, CD-ROM, optical storage, etc.) containing computer-usable program codes. The above is only embodiments of the present disclosure and is not intended to limit the present disclosure.

Various modifications and variations of the present disclosure will occur to those skilled in the art. Any modifications, equivalent substitutions, improvements, etc. made within the spirit and principle of the present disclosure should be included in the scope of the claims of the present disclosure.

**Claims**

**1.** A decoding method, comprising:

obtaining, by decoding a first bitstream of a current image block, a coefficient hyperparameter feature of each of stage sub-blocks in the current image block;
for each of the stage sub-blocks,

determining a probability distribution parameter based on the coefficient hyperparameter feature of the stage sub-block;
obtaining, by decoding a second bitstream of the current image block based on the probability distribution parameter, a residual feature of the stage sub-block;
determining a reconstructed feature of the stage sub-block based on the residual feature of the stage sub-block and a mean feature of the stage sub-block; and

determining a reconstructed image block corresponding to the current image block based on respective reconstructed features of the stage sub-blocks.

**2.** The method according to claim 1, wherein before determining the reconstructed feature of the stage sub-block based on the residual feature of the stage sub-block and the mean feature of the stage sub-block, the method further comprises:
for a first stage sub-block,

obtaining the mean feature of the stage sub-block through a mean prediction network and based on the coefficient hyperparameter feature of the stage sub-block, or,
obtaining a pre-configured default reference feature, and obtaining the mean feature of the stage sub-block through a mean prediction network and based on the coefficient hyperparameter feature of the stage sub-block and the default reference feature.

**3.** The method according to claim 1 or 2, wherein before determining the reconstructed feature of the stage sub-block based on the residual feature of the stage sub-block and the mean feature of the stage sub-block, the method further comprises:

for an i-th stage sub-block, wherein i is greater than 1,

obtaining a reference feature of the i-th stage sub-block based on reconstructed features of preceding i-1 stage sub-blocks; and

obtaining the mean feature of the stage sub-block through a mean prediction network and based on the coefficient hyperparameter feature of the stage sub-block and the reference feature;

wherein the reference feature comprises:

all of the reconstructed features of the preceding i-1 stage sub-blocks; or,
a part of the reconstructed features of the preceding i-1 stage sub-blocks; or,
a reconstructed feature of an (i-1)-th stage sub-block.

4. The method according to claim 2 or 3, wherein the mean prediction network comprises a first prediction network, a second prediction network and a prediction fusion network; and obtaining the mean feature of the stage sub-block through the mean prediction network and based on the coefficient hyperparameter feature of the stage sub-block and the reference feature comprises:

obtaining a first prediction feature corresponding to the coefficient hyperparameter feature through the first prediction network;
obtaining a second prediction feature corresponding to the reference feature through the second prediction network; and
obtaining a concatenated feature by performing feature concatenation on the first prediction feature and the second prediction feature;
inputting the concatenated feature into the prediction fusion network; and
obtaining the mean feature of the stage sub-block by processing the concatenated feature through the prediction fusion network.

5. The method according to claim 4, wherein

obtaining the first prediction feature corresponding to the coefficient hyperparameter feature through the first prediction network comprises: obtaining the first prediction feature by performing feature enhancement operation and upsampling operation on the coefficient hyperparameter feature through the first prediction network; and the feature enhancement operation comprises a convolution operation, or comprises a convolution operation and an activation operation;
the upsampling operation comprises a deconvolution operation, a cropping operation and an activation operation, or comprises a deconvolution operation, a cropping operation, an activation operation and a convolution operation.

6. The method according to claim 5, wherein the activation operation is a Relu operation.

7. The method according to claim 4, wherein obtaining the second prediction feature corresponding to the reference feature through the second prediction network comprises:

performing feature concatenation on all reconstructed features in the reference feature along a channel dimension, and obtaining the second prediction feature by performing convolution operation on the concatenated feature; or,
performing feature summation on all reconstructed features in the reference feature, and obtaining the second prediction feature by performing convolution operation on the summed feature.

8. The method according to claim 4, wherein the obtaining the mean feature of the stage sub-block by processing the concatenated feature through the prediction fusion network comprises:

obtaining the mean feature of the stage sub-block by performing convolution operation and at least one fusion operation on the concatenated feature through the prediction fusion network,
wherein the fusion operation comprises an activation operation and a convolution operation.

9. The method according to claim 8, wherein the activation operation is a Relu operation.

**10.** The method according to any one of claims 1 to 9, wherein after determining the reconstructed feature of the stage sub-block based on the residual feature of the stage sub-block and the mean feature of the stage sub-block, the method further comprises:

obtaining an enhanced reconstructed feature by performing feature enhancement on the reconstructed feature of the stage sub-block,
wherein the enhanced reconstructed feature is used to determine a mean feature of a stage sub-block, and the enhanced reconstructed feature is used to determine the reconstructed image block.

**11.** The method according to any one of claims 1 to 9, wherein determining the reconstructed image block corresponding to the current image block based on the respective reconstructed features of the stage sub-blocks comprises:

obtaining an aggregated feature by performing feature aggregation on the respective reconstructed features of the stage sub-blocks; and obtaining the reconstructed image block corresponding to the current image block by inputting the aggregated feature into a synthesis transform network; or,
obtaining an aggregated feature by performing feature aggregation on the respective reconstructed features of the stage sub-blocks; obtaining partitioned features by partitioning the aggregated feature; obtaining respective partitioned reconstructed image blocks corresponding to the partitioned features by inputting each of the partitioned features into a synthesis transform network; and obtaining the reconstructed image block corresponding to the current image block by merging the respective partitioned reconstructed image blocks corresponding to the partitioned features; or,
obtaining respective partitioned reconstructed image blocks corresponding to the stage sub-blocks by inputting each of the respective reconstructed features of the stage sub-blocks into a synthesis transform network; and obtaining the reconstructed image block corresponding to the current image block by merging the respective partitioned reconstructed image blocks corresponding to the stage sub-blocks.

**12.** The method according to claim 11, wherein obtaining the aggregated feature by performing feature aggregation on the respective reconstructed features of the stage sub-blocks comprises:

obtaining the aggregated feature by aggregating the respective reconstructed features of the stage sub-blocks according to phase; or,
obtaining a plurality of phase-aggregated features by aggregating the respective reconstructed features of the stage sub-blocks according to phase, and obtaining the aggregated feature by concatenating the plurality of phase-aggregated features along a channel dimension.

**13.** The method according to claim 11, wherein obtaining the partitioned features by partitioning the aggregated feature comprises:

determining a target size of the partitioned features; and partitioning the aggregated feature into the partitioned features evenly in an order from top to bottom and left to right based on the target size, wherein a size of each of the partitioned features is the target size; or,
determining an actual partition size and an overlap size of the partitioned features, wherein the actual partition size is a partition size of the partitioned features excluding an overlapping portion, and the overlap size is a size of an overlapping portion between adjacent partitioned features; and partitioning the aggregated feature into the partitioned features based on the actual partition size and the overlap size, wherein a size of each of the partitioned features is the target size.

**14.** The method according to claim 13, wherein obtaining the reconstructed image block corresponding to the current image block by merging the respective partitioned reconstructed image blocks corresponding to the partitioned features comprises:

obtaining the reconstructed image block corresponding to the current image block by sorting the respective partitioned reconstructed image blocks corresponding to the partitioned features in an order from top to bottom and left to right and sequentially concatenating the sorted partitioned reconstructed image blocks; or,
determining an actual partition size and an overlap size of each of the respective partitioned reconstructed image blocks; sorting the respective partitioned reconstructed image blocks corresponding to the partitioned features in an order from top to bottom and left to right; obtaining the reconstructed image block corresponding to the current image block by sequentially concatenating the sorted partitioned reconstructed image blocks based on the actual partition size and the overlap size; wherein a non-overlapping portion of a partitioned reconstructed image block has a size equal to the actual partition size of the partitioned reconstructed image block, and an overlapping portion between the partitioned reconstructed image block and an adjacent partitioned reconstructed image block has a size equal to the overlap size of the partitioned reconstructed image block;

for an overlapping portion between a left partitioned reconstructed image block and a right partitioned reconstructed image block, a value of the overlapping portion is a value of the left partitioned reconstructed image block, or, a value of the overlapping portion is a mean value of the left partitioned reconstructed image block and the right partitioned reconstructed image block; and

for an overlapping portion between an upper partitioned reconstructed image block and a lower partitioned reconstructed image block, a value of the overlapping portion is a value of the upper partitioned reconstructed image block, or, a value of the overlapping portion is a mean value of the upper partitioned reconstructed image block and the lower partitioned reconstructed image block.

**15.** The method according to any one of claims 11 to 14, wherein

obtaining the reconstructed image block corresponding to the current image block by inputting the aggregated feature into the synthesis transform network comprises:

obtaining a bit rate control parameter of the current image block by decoding an auxiliary bitstream corresponding to the current image block, and
obtaining the reconstructed image block corresponding to the current image block by inputting the bit rate control parameter and the aggregated feature into the synthesis transform network; or,

obtaining respective partitioned reconstructed image blocks corresponding to the partitioned features by inputting each of the partitioned features into the synthesis transform network comprises:

obtaining a bit rate control parameter of each of the partitioned features by decoding an auxiliary bitstream corresponding to the current image block, and
for each of the partitioned features, obtaining a partitioned reconstructed image block corresponding to the partitioned feature by inputting the partitioned feature and the bit rate control parameter of the partitioned feature into the synthesis transform network; or,

obtaining respective partitioned reconstructed image blocks corresponding to the stage sub-blocks by inputting each of the respective reconstructed features of the stage sub-blocks into the synthesis transform network comprises:

obtaining a bit rate control parameter of each of the stage sub-blocks by decoding an auxiliary bitstream corresponding to the current image block, and
for each of the stage sub-blocks, obtaining a partitioned reconstructed image block corresponding to the stage sub-block by inputting the reconstructed feature of the stage sub-block and the bit rate control parameter of the stage sub-block into the synthesis transform network.

**16.** The method according to claim 15, wherein

obtaining the reconstructed image block corresponding to the current image block by inputting the bit rate control parameter and the aggregated feature into the synthesis transform network comprises:

obtaining a first feature by processing the aggregated feature through the synthesis transform network;
obtaining a second feature by processing the bit rate control parameter through the synthesis transform network;
generating a third feature based on the first feature and the second feature; and
determining the reconstructed image block corresponding to the current image block based on the third feature; or,

obtaining the partitioned reconstructed image block corresponding to the partitioned feature by inputting the partitioned feature and the bit rate control parameter of the partitioned feature into the synthesis transform network comprises:

obtaining a first feature by processing the partitioned feature through the synthesis transform network;
obtaining a second feature by processing the bit rate control parameter of the partitioned feature through the synthesis transform network;
generating a third feature based on the first feature and the second feature; and
determining the partitioned reconstructed image block corresponding to the partitioned feature based on the third feature; or,

obtaining the partitioned reconstructed image block corresponding to the stage sub-block by inputting the reconstructed feature of the stage sub-block and the bit rate control parameter of the stage sub-block into the synthesis transform network comprises:

obtaining a first feature by processing the reconstructed feature of the stage sub-block through the synthesis transform network;
obtaining a second feature by processing the bit rate control parameter of the stage sub-block through the synthesis transform network;
generating a third feature based on the first feature and the second feature; and
determining the partitioned reconstructed image block corresponding to the stage sub-block based on the third feature.

17. A coding method, comprising:

obtaining, by inputting a current image block into an analysis transform network, a feature block corresponding to the current image block;
splitting the feature block into to-be-coded features of a plurality of stage sub-blocks;
for each of the stage sub-blocks corresponding to the current image block,

obtaining a coefficient hyperparameter feature of the stage sub-block;
coding the coefficient hyperparameter feature of the stage sub-block into a first bitstream of the current image block;
determining a residual feature of the stage sub-block based on the to-be-coded feature of the stage sub-block and a mean feature of the stage sub-block;
determining a probability distribution parameter based on the coefficient hyperparameter feature of the stage sub-block; and
coding the residual feature of the stage sub-block into a second bitstream of the current image block based on the probability distribution parameter.

18. The method according to claim 17, wherein before determining the residual feature of the stage sub-block based on the to-be-coded feature of the stage sub-block and the mean feature of the stage sub-block, the method further comprises:
for a first stage sub-block, obtaining the mean feature of the stage sub-block through a mean prediction network and based on the coefficient hyperparameter feature of the stage sub-block, or, obtaining a pre-configured default reference feature, and obtaining the mean feature of the stage sub-block through a mean prediction network and based on the coefficient hyperparameter feature of the stage sub-block and the default reference feature.

19. The method according to claim 17 or 18, wherein before determining the residual feature of the stage sub-block based on the to-be-coded feature of the stage sub-block and the mean feature of the stage sub-block, the method further comprises:
for an i-th stage sub-block, wherein i is greater than 1, obtaining a reference feature of the i-th stage sub-block based on reconstructed features of preceding i-1 stage sub-blocks; and obtaining the mean feature of the stage sub-block through a mean prediction network and based on the coefficient hyperparameter feature of the stage sub-block and the reference feature; wherein the reference feature comprises all of the reconstructed features of the preceding i-1 stage sub-blocks; or, a part of the reconstructed features of the preceding i-1 stage sub-blocks; or, a reconstructed feature of an (i-1)-th stage sub-block.

20. A decoding method, comprising:

obtaining, by decoding a first bitstream of a current image block, a coefficient hyperparameter feature of the current image block;

determining a probability distribution parameter based on the coefficient hyperparameter feature;

obtaining, by decoding a second bitstream of the current image block based on the probability distribution parameter, a residual feature of the current image block;

determining a reconstructed feature of the current image block based on the residual feature;

obtaining, by decoding an auxiliary bitstream corresponding to the current image block, a bit rate control parameter of the current image block; and

obtaining; by inputting the reconstructed feature and the bit rate control parameter into a synthesis transform network, a reconstructed image block corresponding to the current image block.

21. The method according to claim 20, wherein obtaining; by inputting the reconstructed feature and the bit rate control parameter into the synthesis transform network, the reconstructed image block corresponding to the current image block comprises:

obtaining a first feature by processing the reconstructed feature through the synthesis transform network;

obtaining a second feature by processing the bit rate control parameter through the synthesis transform network;

generating a third feature based on the first feature and the second feature; and

determining the reconstructed image block corresponding to the current image block based on the third feature.

22. A decoding apparatus, comprising:

a decoding module, configured to obtain, by decoding a first bitstream of a current image block, a coefficient hyperparameter feature of each of stage sub-blocks in the current image block; for each of the stage sub-blocks, determine a probability distribution parameter based on the coefficient hyperparameter feature of the stage sub-block, and obtain, by decoding a second bitstream of the current image block based on the probability distribution parameter, a residual feature of the stage sub-block; and

a determination module, configured to determine a reconstructed feature of the stage sub-block based on the residual feature of the stage sub-block and a mean feature of the stage sub-block; and determine a reconstructed image block corresponding to the current image block based on respective reconstructed features of the stage sub-blocks.

23. A coding apparatus, comprising:

an acquisition module, configured to obtain, by inputting a current image block into an analysis transform network, a feature block corresponding to the current image block; and split the feature block into to-be-coded features of a plurality of stage sub-blocks;

a coding module, configured to, for each of the stage sub-blocks corresponding to the current image block, obtain a coefficient hyperparameter feature of the stage sub-block, and code the coefficient hyperparameter feature of the stage sub-block into a first bitstream of the current image block;

a determination module, configured to determine a residual feature of the stage sub-block based on the to-be-coded feature of the stage sub-block and a mean feature of the stage sub-block; and

the coding module is further configured to determine a probability distribution parameter based on the coefficient hyperparameter feature of the stage sub-block, and code the residual feature of the stage sub-block into a second bitstream of the current image block based on the probability distribution parameter.

24. A decoding device, comprising at least one processor and a machine-readable storage medium, wherein the machine-readable storage medium stores machine executable instructions executable by the at least one processor, and the at least one processor is configured to execute the machine-executable instructions to perform the methods according to any one of claims 1 to 16.

25. A coding device, comprising at least one processor and a machine-readable storage medium, wherein the machine-readable storage medium stores machine executable instructions executable by the at least one processor, and the at least one processor is configured to execute the machine-executable instructions to perform the methods according to any one of claims 17 to 19.

26. A machine-readable storage medium, wherein a plurality of computer instructions are stored on the machine-readable storage medium, and when the computer instructions are executed by at least one processor, cause the at least one processor to perform the method according to any one of claims 1 to 16; or when the computer instructions are executed by at least one processor, cause the at least one processor to perform the method according to any one of claims 17 to 19.

27. A computer application program, wherein when the computer application program is executed by at least one processor, cause the at least one processor to perform the method according to any one of claims 1 to 16; or when the computer application program is executed by at least one processor, cause the at least one processor to perform the method according to any one of claims 17 to 19.

WxH

C Channels

FIG. 1

Obtain, by decoding a first bitstream of a current image block, a coefficient hyperparameter feature of each of stage sub-blocks in the current image block — 201

For each of the stage sub-blocks, determine a probability distribution parameter based on the coefficient hyperparameter feature of the stage sub-block, and obtain, by decoding a second bitstream of the current image block based on the probability distribution parameter, a residual feature of the stage sub-block — 202

Determine a reconstructed feature of the stage sub-block based on the residual feature of the stage sub-block and a mean feature of the stage sub-block — 203

Determine a reconstructed image block corresponding to the current image block based on respective reconstructed features of the stage sub-blocks — 204

FIG. 2

| | |
|---|---|
| Obtain, by inputting a current image block into an analysis transform network, a feature block corresponding to the current image block | 301 |
| Split the feature block into to-be-coded features of a plurality of stage sub-blocks | 302 |
| For each of the stage sub-blocks corresponding to the current image block, obtain a coefficient hyperparameter feature of the stage sub-block, and code the coefficient hyperparameter feature of the stage sub-block into a first bitstream of the current image block | 303 |
| Determine a residual feature of the stage sub-block based on the to-be-coded feature of the stage sub-block and a mean feature of the stage sub-block | 304 |
| Determine a probability distribution parameter based on the coefficient hyperparameter feature of the stage sub-block, and code the residual feature of the stage sub-block into a second bitstream of the current image block based on the probability distribution parameter | 305 |

FIG. 3

FIG. 4

FIG. 5

FIG. 6

FIG. 7

FIG. 8A

FIG. 8B

FIG. 8C

FIG. 8D

Input feature → 2x deconvolutional layer → Crop layer → Activation layer → Output feature

FIG. 8E

Input feature → 2x deconvolutional layer → Crop layer → Activation layer → Convolutional layer → Output feature

FIG. 8F

y_hat_1~ y_hat_i-1 → Feature concatenation → Convolutional layer → Second prediction feature

FIG. 8G

Input feature → Convolutional layer → Activation layer → Convolutional layer → Output feature

Repeatable N times

FIG. 8H

y_hat_1
y_hat_2
y_hat_3
y_hat_4

y_hat_group1

FIG. 9A

y_hat_group1

y_hat_group2

y_hat_all

FIG. 9B

y_hat_1

y_hat_2

y_hat_3

y_hat_4

y_hat_group1

Remove meaningless features

y_hat_group1

FIG. 9C

y_hat_all

tile_c

tile_w

tile_h

y_hat_p_1

y_hat_p_2

y_hat_p_3

y_hat_p_4

FIG. 9D

y_hat_all

y_hat_p_1

y_hat_p_2

y_hat_p_3

y_hat_p_4

tile_h

padding_h

tile_c

tile_w    padding_w

FIG. 9E

First partition    Second partition    Third partition

FIG. 9F

Variable Bitrate decoder

FIG. 10A

FIG. 10B

FIG. 10C

C' filters

Regular convolution

FIG. 11A

C'/2 filters

C'/2 filters

Group convolution

FIG. 11B

FIG. 12

Processor —1301    Decoding device

1302

Machine-readable storage medium

Decoding instruction

FIG. 13A

Processor —1311    Coding device

1312

Machine-readable storage medium

Coding instruction

FIG. 13B

## INTERNATIONAL SEARCH REPORT

| International application No. |
| --- |
| **PCT/CN2024/087619** |

| A. | CLASSIFICATION OF SUBJECT MATTER |
| --- | --- |
| | H04N19/103(2014.01)i |

According to International Patent Classification (IPC) or to both national classification and IPC

| B. | FIELDS SEARCHED |
| --- | --- |

Minimum documentation searched (classification system followed by classification symbols)

IPC: H04N

Documentation searched other than minimum documentation to the extent that such documents are included in the fields searched

Electronic data base consulted during the international search (name of data base and, where practicable, search terms used)

CNABS, CNKI, CNTXT, VEN, DWPI, WPABS, WPABSC, ENTXT, ENTXTC, VCN, VVC, HEVC: 编码, 解码, 概率分布, 第一码流, 第二码流, 残差, 均值, 重建, 图像, 神经网络, 预测网络, 码率, 超参特征, encode, decode, probability distribution, first stream, second stream, residual, mean value, reconstruct, image, neural network, predictive network, code rate, hyperparameter feature

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| A | CN 111641832 A (HANGZHOU HIKVISION DIGITAL TECHNOLOGY CO., LTD.) 08 September 2020 (2020-09-08) <br> entire document | 1-27 |
| A | CN 114731406 A (SZ DJI TECHNOLOGY CO., LTD.) 08 July 2022 (2022-07-08) <br> entire document | 1-27 |
| A | CN 115118972 A (HUAWEI TECHNOLOGIES CO., LTD.) 27 September 2022 (2022-09-27) <br> entire document | 1-27 |
| A | CN 109923865 A (HUAWEI TECHNOLOGIES CO., LTD.; TSINGHUA UNIVERSITY) 21 June 2019 (2019-06-21) <br> entire document | 1-27 |
| A | US 2010086035 A1 (LG ELECTRONICS INC.) 08 April 2010 (2010-04-08) <br> entire document | 1-27 |

☐ Further documents are listed in the continuation of Box C.    ☑ See patent family annex.

| * | Special categories of cited documents: |
| --- | --- |
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
| --- | --- |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
| --- | --- |
| **26 July 2024** | **26 July 2024** |

| Name and mailing address of the ISA/CN | Authorized officer |
| --- | --- |
| **China National Intellectual Property Administration (ISA/ CN)** <br> **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
Information on patent family members

International application No.

**PCT/CN2024/087619**

| Patent document cited in search report | | | Publication date (day/month/year) | Patent family member(s) | | | Publication date (day/month/year) |
|---|---|---|---|---|---|---|---|
| CN | 111641832 | A | 08 September 2020 | None | | | |
| CN | 114731406 | A | 08 July 2022 | None | | | |
| CN | 115118972 | A | 27 September 2022 | None | | | |
| CN | 109923865 | A | 21 June 2019 | WO | 2018170793 | A1 | 27 September 2018 |
| | | | | EP | 3591973 | A1 | 08 January 2020 |
| | | | | EP | 3591973 | A4 | 18 March 2020 |
| | | | | US | 2020021850 | A1 | 16 January 2020 |
| US | 2010086035 | A1 | 08 April 2010 | US | 8879637 | B2 | 04 November 2014 |
| | | | | US | 2023199212 | A1 | 22 June 2023 |
| | | | | WO | 2010041857 | A2 | 15 April 2010 |
| | | | | WO | 2010041857 | A3 | 22 July 2010 |
| | | | | WO | 2010041858 | A2 | 15 April 2010 |
| | | | | WO | 2010041858 | A3 | 22 July 2010 |
| | | | | US | 2014037008 | A1 | 06 February 2014 |
| | | | | US | 9167249 | B2 | 20 October 2015 |
| | | | | US | 2020053376 | A1 | 13 February 2020 |
| | | | | US | 2020053375 | A1 | 13 February 2020 |
| | | | | US | 11159815 | B2 | 26 October 2021 |
| | | | | US | 2022030282 | A1 | 27 January 2022 |
| | | | | US | 11611772 | B2 | 21 March 2023 |
| | | | | US | 2019158865 | A1 | 23 May 2019 |
| | | | | US | 10499077 | B2 | 03 December 2019 |
| | | | | US | 2018324452 | A1 | 08 November 2018 |
| | | | | US | 10230974 | B2 | 12 March 2019 |
| | | | | US | 2010086034 | A1 | 08 April 2010 |
| | | | | US | 10455248 | B2 | 22 October 2019 |
| | | | | US | 2017324972 | A1 | 09 November 2017 |
| | | | | US | 10038912 | B2 | 31 July 2018 |
| | | | | US | 2015334419 | A1 | 19 November 2015 |
| | | | | US | 9749652 | B2 | 29 August 2017 |

Form PCT/ISA/210 (patent family annex) (July 2022)